# EUROPEAN PATENT APPLICATION

(11) **EP 4 465 687 A1**
(43) Date of publication of application: **20.11.2024**
(21) Application number: 23173309.8
(22) Date of filing: 15.05.2023
(51) Int. Cl.: H04W 24/10

(54) **USER EQUIPMENT AND BASE STATION INVOLVED IN CHANNEL MEASUREMENT REPORTING**

(71) Applicant: Panasonic Intellectual Property Corporation of America, Torrance, CA 90504 (US)
(72) Inventor: LI, Hongchao, 63225 Langen (DE); SUZUKI, Hidetoshi, Osaka, 571-8501 (JP)
(74) Representative: Grünecker Patent- und Rechtsanwälte PartG mbB

(57) **Abstract**

The present disclosure relates to a user equipment comprising the following. A receiver receives, from a base station, a reference signal configuration about a plurality of candidate resource configurations of a reference signal that can be transmitted by the base station to the UE. The receiver receives, from the base station, a reference signal configuration indication, indicating one or more of the configured plurality of candidate resource configurations. A processor measures the reference signal received from the base station based on the indicated candidate resource configurations. The processor generates one or more measurement reports including measurement results for the measured reference signal. A transmitter transmits, to the base station, the generated measurement reports.

## Description

### FIELD OF THE PRESENT DISCLOSURE

The present disclosure is directed to methods, devices and articles in communication systems, such as 3GPP communication systems.

### TECHNICAL BACKGROUND

Currently, the 3rd Generation Partnership Project (3GPP) works at the technical specifications for the new radio access technology - 5G NR (New Radio), which is also called fifth generation (5G) or NR and used interchangeably herein.

One objective is to provide a single technical framework addressing all usage scenarios, requirements and deployment scenarios (see e.g., section 6 of 3GPP TR 38.913 e.g., version 16.0.0 or version 17.0.0), at least including enhanced mobile broadband (eMBB), ultra-reliable low-latency communications (URLLC), and massive machine type communication (mMTC). For example, eMBB deployment scenarios may include indoor hotspot, dense urban, rural, urban macro and high speed; URLLC deployment scenarios may include industrial control systems, mobile health care (remote monitoring, diagnosis and treatment), real time control of vehicles, wide area monitoring and control systems for smart grids; mMTC deployment scenarios may include scenarios with large number of devices with non-time critical data transfers such as smart wearables and sensor networks. The services eMBB and URLLC are similar in that they both demand a very broad bandwidth, while they are different in that the URLLC service may preferably require ultra-low latencies.

A second objective is to achieve forward compatibility, which facilitates a completely new system design and/or the introduction of novel features.

### SUMMARY

One non-limiting and exemplary embodiment facilitates for a user equipment to perform improved procedures.

In an embodiment, the techniques disclosed here feature a user equipment comprising the following. A receiver of the UE receives, from a base station, a reference signal configuration about a plurality of candidate resource configurations of a reference signal that can be transmitted by the base station to the UE. The receiver receives, from the base station, a reference signal configuration indication, indicating one or more of the configured plurality of candidate resource configurations. A processor of the UE measures the reference signal received from the base station based on the indicated candidate resource configurations. The processor generates one or more measurement reports including measurement results for the measured reference signal. A transmitter of the UE transmits, to the base station, the generated measurement reports.

Additional benefits and advantages of the disclosed embodiments and different implementations will be apparent from the specification and figures. The benefits and/or advantages may be individually obtained by the various embodiments and features of the specification and drawings, which need not all be provided in order to obtain one or more of such benefits and/or advantages.

### BRIEF DESCRIPTION OF THE FIGURES

In the following exemplary embodiments are described in more detail with reference to the attached figures and drawings.
- **Fig. 1**: shows an exemplary architecture for a 3GPP NR system to which the improved procedures of the present disclosure may be applied;
- **Fig. 2**: is a schematic drawing that shows a functional split between NG Radio Access Network (NG-RAN) and 5G Core Network (5GC), to which the improved procedures of the present disclosure may be applied,
- **Fig. 3**: is a sequence diagram for Radio Resource Control (RRC) connection setup/reconfiguration procedures to which the improved procedures of the present disclosure may be applied,
- **Fig. 4**: is a schematic drawing showing usage scenarios of eMBB, mMTC and URLLC to which the improved procedures of the present disclosure may be applied,
- **Fig. 5**: is a block diagram showing an exemplary 3GPP NR system architecture for a non-roaming scenario,
- **Fig. 6**: illustrates a simplified and exemplary implementation of a set of synchronization signal blocks distributed in a half-frame,
- **Fig. 7**: illustrates several beams and the corresponding SSB index, SSB1-SSB8, and how the beams are transmitted by the gNB in a beam-sweeping manner,
- **Fig. 8**: illustrates a signaling diagram for CSI measurement and reporting,
- **Fig. 9**: illustrates an exemplary and simplified structure of a UE and a gNB,
- **Fig. 10**: illustrates a structure of the UE according to a basic implementation underlying the First to Fourth Solutions,
- **Fig. 11**: illustrates a flow diagram for the UE behavior according to a basic implementation underlying the First to Fourth Solutions,
- **Fig. 12**: illustrates a structure of the base station according to a basic implementation underlying the First to Fourth Solutions,
- **Fig. 13**: illustrates a flow diagram for the base station behavior according to a basic implementation underlying the First to Fourth Solutions,
- **Fig. 14**: illustrates a flow diagram for the UE behavior according to an exemplary implementation of the First Solution,
- **Fig. 15**: illustrates a flow diagram for the UE behavior according to an exemplary implementation of the Second Solution,
- **Fig. 16-18**: illustrate alternative structures of sub-configurations within reporting configurations according to an exemplary implementation of the Second Solution,
- **Fig. 19**: illustrates a flow diagram for the UE behavior according to an exemplary implementation of the Third Solution, and
- **Fig. 20**: illustrates a flow diagram for the UE behavior according to an exemplary implementation of the Fourth Solution.

### DETAILED DESCRIPTION

### 5G NR system architecture and protocol stacks

3GPP has been working at the next release for the 5^{th} generation cellular technology, simply called 5G, including the development of a new radio access technology operating in frequencies ranging up to 100 GHz. The first version of the 5G standard was completed at the end of 2017, which allows proceeding to 5G NR standard-compliant trials and commercial deployments of smartphones.

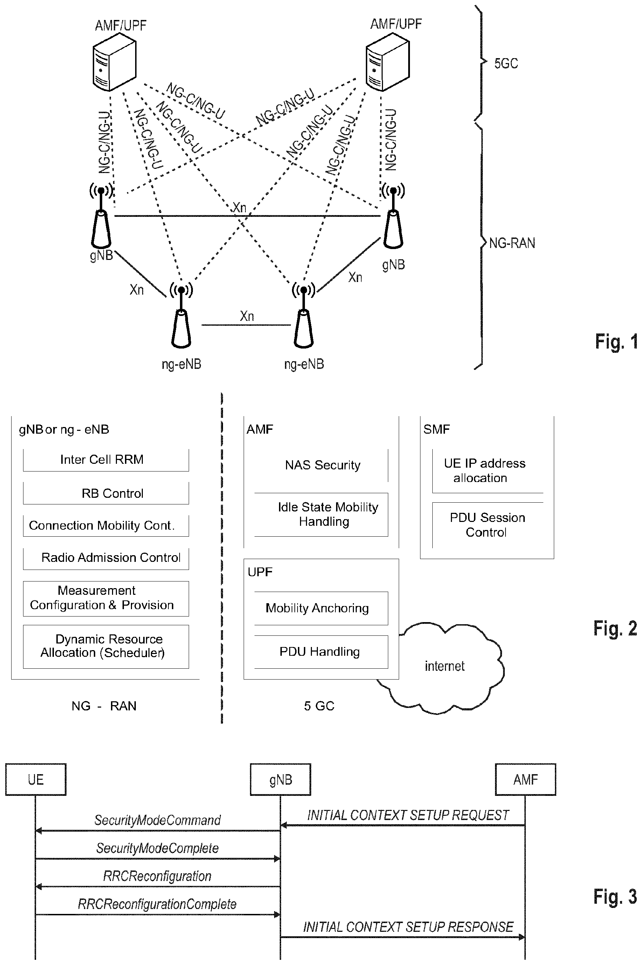

Among other things, the overall system architecture assumes an NG-RAN (Next Generation - Radio Access Network) that comprises gNBs, providing the NG-radio access user plane (SDAP/PDCP/RLC/MAC/PHY) and control plane (RRC) protocol terminations towards the UE. The gNBs are interconnected with each other by means of the Xn interface. The gNBs are also connected by means of the Next Generation (NG) interface to the 5GC, more specifically to the AMF (Access and Mobility Management Function) (e.g., a particular core entity performing the AMF) by means of the NG-C interface and to the UPF (User Plane Function) (e.g., a particular core entity performing the UPF) by means of the NG-U interface. The NG-RAN architecture is illustrated in **Fig. 1** (see e.g., 3GPP TS 38.300 e.g., v17.2.0, section 4).

The user plane protocol stack for NR (see e.g., 3GPP TS 38.300, section 4.4.1) comprises the PDCP (Packet Data Convergence Protocol, see section 6.4 of 3GPPTS 38.300), RLC (Radio Link Control, see section 6.3 of TS 38.300) and MAC (Medium Access Control, see section 6.2 of TS 38.300) sublayers, which are terminated in the gNB on the network side. Additionally, a new access stratum (AS) sublayer (SOAP, Service Data Adaptation Protocol) is introduced above PDCP (see e.g., sub-clause 6.5 of TS 38.300). A control plane protocol stack is also defined for NR (see for instance TS 38.300, section 4.4.2). An overview of the Layer 2 functions is given in sub-clause 6 of TS 38.300. The functions of the RRC layer are listed in sub-clause 7 of TS 38.300.

For instance, the Medium-Access-Control layer handles logical-channel multiplexing, and scheduling and scheduling-related functions, including handling of different numerologies.

The physical layer (PHY) is for example responsible for coding, PHY HARQ processing, modulation, multi-antenna processing, and mapping of the signal to the appropriate physical time-frequency resources. It also handles mapping of transport channels to physical channels. The physical layer provides services to the MAC layer in the form of transport channels. A physical channel corresponds to the set of time-frequency resources used for transmission of a particular transport channel, and each transport channel is mapped to a corresponding physical channel. For instance, the physical channels are PRACH (Physical Random Access Channel), PUSCH (Physical Uplink Shared Channel) and PUCCH (Physical Uplink Control Channel) for uplink and PDSCH (Physical Downlink Shared Channel), PDCCH (Physical Downlink Control Channel) and PBCH (Physical Broadcast Channel) for downlink.

Use cases / deployment scenarios for NR could include enhanced mobile broadband (eMBB), ultra-reliable low-latency communications (URLLC), massive machine type communication (mMTC), which have diverse requirements in terms of data rates, latency, and coverage. For example, eMBB is expected to support peak data rates (20Gbps for downlink and 10Gbps for uplink) and user-experienced data rates in the order of three times what is offered by IMT-Advanced. On the other hand, in case of URLLC, the tighter requirements are put on ultra-low latency (0.5ms for UL and DL each for user plane latency) and high reliability (1-10⁻⁵ within 1ms). Finally, mMTC may preferably require high connection density (1,000,000 devices/km² in an urban environment), large coverage in harsh environments, and extremely long-life battery for low cost devices (15 years).

Therefore, the OFDM numerology (e.g., subcarrier spacing, OFDM symbol duration, cyclic prefix (CP) duration, number of symbols per scheduling interval) that is suitable for one use case might not work well for another. For example, low-latency services may preferably require a shorter symbol duration (and thus larger subcarrier spacing) and/or fewer symbols per scheduling interval (aka, TTI) than an mMTC service. Furthermore, deployment scenarios with large channel delay spreads may preferably require a longer CP duration than scenarios with short delay spreads. The subcarrier spacing should be optimized accordingly to retain the similar CP overhead. NR may support more than one value of subcarrier spacing. Correspondingly, subcarrier spacing of 15 kHz, 30 kHz, 60 kHz... are being considered at the moment. The symbol duration Tᵤ and the subcarrier spacing Δf are directly related through the formula Δf = 1 / Tᵤ. In a similar manner as in LTE systems, the term "resource element" can be used to denote a minimum resource unit being composed of one subcarrier for the length of one OFDM/SC-FDMA symbol.

In the new radio system 5G-NR for each numerology and carrier a resource grid of subcarriers and OFDM symbols is defined respectively for uplink and downlink. Each element in the resource grid is called a resource element and is identified based on the frequency index in the frequency domain and the symbol position in the time domain (see 3GPP TS 38.211 e.g., v17.4.0, e.g., section 4). For instance, downlink and uplink transmissions are organized into frames with 10ms duration, each frame consisting of ten subframes of respectively 1ms duration. In 5g NR implementations the number of consecutive OFDM symbols per subframe depends on the subcarrier-spacing configuration. For example, for a 15-kHz subcarrier spacing, a subframe has 14 OFDM symbols (similar to an LTE-conformant implementation, assuming a normal cyclic prefix). On the other hand, for a 30-kHz subcarrier spacing, a subframe has two slots, each slot comprising 14 OFDM symbols.

### 5G NR functional split between NG-RAN and 5GC

**Fig. 2** illustrates functional split between NG-RAN and 5GC. NG-RAN logical node is a gNB or ng-eNB. The 5GC has logical nodes AMF, UPF and SMF.

In particular, the gNB and ng-eNB host the following main functions:
- Functions for Radio Resource Management such as Radio Bearer Control, Radio Admission Control, Connection Mobility Control, Dynamic allocation of resources to UEs in both uplink and downlink (scheduling);
- IP header compression, encryption and integrity protection of data;
- Selection of an AMF at UE attachment when no routing to an AMF can be determined from the information provided by the UE;
- Routing of User Plane data towards UPF(s);
- Routing of Control Plane information towards AMF;
- Connection setup and release;
- Scheduling and transmission of paging messages;
- Scheduling and transmission of system broadcast information (originated from the AMF or OAM);
- Measurement and measurement reporting configuration for mobility and scheduling;
- Transport level packet marking in the uplink;
- Session Management;
- Support of Network Slicing;
- QoS Flow management and mapping to data radio bearers;
- Support of UEs in RRC_INACTIVE state;
- Distribution function for NAS messages;
- Radio access network sharing;
- Dual Connectivity;
- Tight interworking between NR and E-UTRA.

The Access and Mobility Management Function (AMF) hosts the following main functions:
- Non-Access Stratum, NAS, signalling termination;
- NAS signalling security;
- Access Stratum, AS, Security control;
- Inter Core Network, CN, node signalling for mobility between 3GPP access networks;
- Idle mode UE Reachability (including control and execution of paging retransmission);
- Registration Area management;
- Support of intra-system and inter-system mobility;
- Access Authentication;
- Access Authorization including check of roaming rights;
- Mobility management control (subscription and policies);
- Support of Network Slicing;
- Session Management Function, SMF, selection.

Furthermore, the User Plane Function, UPF, hosts the following main functions:
- Anchor point for Intra-/Inter-RAT mobility (when applicable);
- External PDU session point of interconnect to Data Network;
- Packet routing & forwarding;
- Packet inspection and User plane part of Policy rule enforcement;
- Traffic usage reporting;
- Uplink classifier to support routing traffic flows to a data network;
- Branching point to support multi-homed PDU session;
- QoS handling for user plane, e.g., packet filtering, gating, UL/DL rate enforcement;
- Uplink Traffic verification (SDF to QoS flow mapping);
- Downlink packet buffering and downlink data notification triggering.

Finally, the Session Management function, SMF, hosts the following main functions:
- Session Management;
- UE IP address allocation and management;
- Selection and control of UP function;
- Configures traffic steering at User Plane Function, UPF, to route traffic to proper destination;
- Control part of policy enforcement and QoS;
- Downlink Data Notification.

### RRC connection setup and reconfiguration procedures

**Fig. 3** illustrates some interactions between a UE, gNB, and AMF (a 5GC entity) in the context of a transition of the UE from RRC_IDLE to RRC_CONNECTED for the NAS part (see 3GPP TS 38.300).

RRC is a higher layer signaling (protocol) used for UE and gNB configuration. In particular, this transition may involve that the AMF prepares the UE context data (including e.g., PDU session context, the Security Key, UE Radio Capability and UE Security Capabilities, etc.) and sends it to the gNB with the INITIAL CONTEXT SETUP REQUEST. Then, the gNB activates the AS security with the UE, which is performed by the gNB transmitting to the UE a SecurityModeCommand message and by the UE responding to the gNB with the SecurityModeComplete message. Afterwards, the gNB performs the reconfiguration to setup the Signaling Radio Bearer 2, SRB2, and Data Radio Bearer(s), DRB(s) by means of transmitting to the UE the RRCReconfiguration message and, in response, receiving by the gNB the RRCReconfigurationComplete from the UE. For a signalling-only connection, the steps relating to the RRCReconfiguration are skipped since SRB2 and DRBs are not setup. Finally, the gNB informs the AMF that the setup procedure is completed with the INITIAL CONTEXT SETUP RESPONSE.

In the present disclosure, thus, an entity (for example AMF, SMF, etc.) of a 5GC is provided that comprises circuitry which, in operation, establishes a Next Generation (NG) connection with a gNodeB; and a transmitter which, in operation, transmits an initial context setup message, via the NG connection, to the gNodeB to cause a signaling radio bearer setup between the gNodeB and a user equipment (UE). In particular, the gNodeB transmits an RRC signaling containing a resource allocation configuration information element (IE) to the UE via the signaling radio bearer. The UE then performs an uplink transmission or a downlink reception based on the resource allocation configuration.

### Usage Scenarios of IMT for 2020 and beyond

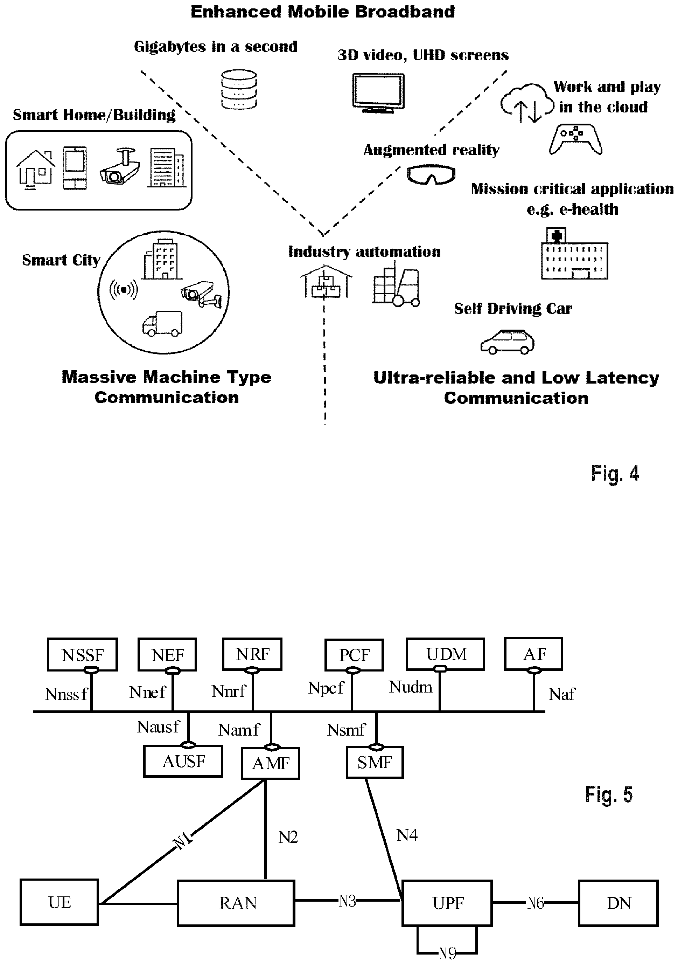

**Fig. 4** illustrates some of the use cases for 5G NR. In 3rd generation partnership project new radio (3GPP NR), three use cases are being considered that have been envisaged to support a wide variety of services and applications by IMT-2020. The specification for the phase 1 of enhanced mobile-broadband (eMBB) has been concluded. In addition to further extending the eMBB support, the current and future work would involve the standardization for ultra-reliable and low-latency communications (URLLC) and massive machine-type communications. Fig. 4 illustrates some examples of envisioned usage scenarios for IMT for 2020 and beyond (see e.g., ITU-R M.20183 Fig. 2).

The URLLC use case has stringent requirements for capabilities such as throughput, latency and availability and has been envisioned as one of the enablers for future vertical applications such as wireless control of industrial manufacturing or production processes, remote medical surgery, distribution automation in a smart grid, transportation safety, etc. Ultra-reliability for URLLC is to be supported by identifying the techniques to meet the requirements set by 3GPP TR 38.913. For NR URLLC in Release 15, key requirements include a target user plane latency of 0.5 ms for UL (uplink) and 0.5 ms for DL (downlink). The general URLLC requirement for one transmission of a packet is a BLER (block error rate) of 1E-5 for a packet size of 32 bytes with a user plane latency of 1ms.

From the physical layer perspective, reliability can be improved in a number of possible ways. The current scope for improving the reliability involves defining separate CQI tables for URLLC, more compact DCI formats, repetition of PDCCH, etc. However, the scope may widen for achieving ultra-reliability as the NR becomes more stable and developed (for NR URLLC key requirements). Particular use cases of NR URLLC in Rel. 15 include Augmented Reality/Virtual Reality (AR/VR), e-health, e-safety, and mission-critical applications.

Moreover, technology enhancements targeted by NR URLLC aim at latency improvement and reliability improvement. Technology enhancements for latency improvement include configurable numerology, non slot-based scheduling with flexible mapping, grant free (configured grant) uplink, slot-level repetition for data channels, and downlink pre-emption. Pre-emption means that a transmission for which resources have already been allocated is stopped, and the already allocated resources are used for another transmission that has been requested later, but has lower latency / higher priority requirements. Accordingly, the already granted transmission is pre-empted by a later transmission. Pre-emption is applicable independent of the particular service type. For example, a transmission for a service-type A (URLLC) may be pre-empted by a transmission for a service type B (such as eMBB). Technology enhancements with respect to reliability improvement include dedicated CQI/MCS tables for the target BLER of 1E-5.

The use case of mMTC (massive machine type communication) is characterized by a very large number of connected devices typically transmitting a relatively low volume of non-delay sensitive data. Devices are required to be low cost and to have a very long battery life. From NR perspective, utilizing very narrow bandwidth parts is one possible solution to have power saving from UE perspective and enable long battery life.

As mentioned above, it is expected that the scope of reliability in NR becomes wider. One key requirement to all the cases, and especially necessary for URLLC and mMTC, is high reliability or ultra-reliability. Several mechanisms can be considered to improve the reliability from radio perspective and network perspective. In general, there are a few key potential areas that can help improve the reliability. Among these areas are compact control channel information, data/control channel repetition, and diversity with respect to frequency, time and/or the spatial domain. These areas are applicable to reliability in general, regardless of particular communication scenarios.

For NR URLLC, further use cases with tighter requirements have been identified such as factory automation, transport industry and electrical power distribution, including factory automation, transport industry, and electrical power distribution. The tighter requirements are higher reliability (up to 10⁶ level), higher availability, packet sizes of up to 256 bytes, time synchronization down to the order of a few µs where the value can be one or a few µs depending on frequency range and short latency in the order of 0.5 to 1 ms in particular a target user plane latency of 0.5 ms, depending on the use cases.

Moreover, for NR URLLC, several technology enhancements from physical layer perspective have been identified. Among these are PDCCH (Physical Downlink Control Channel) enhancements related to compact DCI, PDCCH repetition, increased PDCCH monitoring. Moreover, UCI (Uplink Control Information) enhancements are related to enhanced HARQ (Hybrid Automatic Repeat Request) and CSI feedback enhancements. Also, PUSCH enhancements related to mini-slot level hopping and retransmission/repetition enhancements have been identified. The term "mini-slot" refers to a Transmission Time Interval (TTI) including a smaller number of symbols than a slot (a slot comprising fourteen symbols).

### QoS control

The 5G QoS (Quality of Service) model is based on QoS flows and supports both QoS flows that require guaranteed flow bit rate (GBR QoS flows) and QoS flows that do not require guaranteed flow bit rate (non-GBR QoS Flows). At NAS level, the QoS flow is thus the finest granularity of QoS differentiation in a PDU session. A QoS flow is identified within a PDU session by a QoS flow ID (QFI) carried in an encapsulation header over NG-U interface.

For each UE, 5GC establishes one or more PDU Sessions. For each UE, the NG-RAN establishes at least one Data Radio Bearers (DRB) together with the PDU Session, and additional DRB(s) for QoS flow(s) of that PDU session can be subsequently configured (it is up to NG-RAN when to do so), e.g., as shown above with reference to Fig. 3. The NG-RAN maps packets belonging to different PDU sessions to different DRBs. NAS level packet filters in the UE and in the 5GC associate UL and DL packets with QoS Flows, whereas AS-level mapping rules in the UE and in the NG-RAN associate UL and DL QoS Flows with DRBs.

**Fig. 5** illustrates a 5G NR non-roaming reference architecture (see e.g., 3GPP TS 23.501 e.g., v16.9.0, section 4.2.3, see also v17.5.0 or v18.0.0). An Application Function (AF), e.g., an external application server hosting 5G services, exemplarily described in Fig. 4, interacts with the 3GPP Core Network in order to provide services, for example to support application influence on traffic routing, accessing Network Exposure Function (NEF) or interacting with the Policy framework for policy control (see Policy Control Function, PCF), e.g., QoS control. Based on operator deployment, Application Functions considered to be trusted by the operator can be allowed to interact directly with relevant Network Functions. Application Functions not allowed by the operator to access directly the Network Functions use the external exposure framework via the NEF to interact with relevant Network Functions.

Fig. 5 shows further functional units of the 5G architecture, namely Network Slice Selection Function (NSSF), Network Repository Function (NRF), Unified Data Management (UDM), Authentication Server Function (AUSF), Access and Mobility Management Function (AMF), Session Management Function (SMF), and Data Network (DN), e.g., operator services, Internet access or 3rd party services. All of or a part of the core network functions and the application services may be deployed and running on cloud computing environments.

In the present disclosure, thus, an application server (for example, AF of the 5G architecture), is provided that comprises a transmitter, which, in operation, transmits a request containing a QoS requirement for at least one of URLLC, eMBB and mMTC services to at least one of functions (for example NEF, AMF, SMF, PCF,UPF, etc.) of the 5GC to establish a PDU session including a radio bearer between a gNodeB and a UE in accordance with the QoS requirement and circuitry, which, in operation, performs the services using the established PDU session.

### Synchronization Signal Block measurement timing configuration - SMTC - PSS/SSS, PBCH

NR has introduced the so-called synchronization signal block, SS block (SSB), which comprises a Primary Synchronization Signal (PSS), a Secondary Synchronization Signal (SSS), and a Physical Broadcast CHannel (PBCH) (in fact PBCH DMRS and PBCH data). The PSS and SSS can be used by UEs to find, synchronize to and identify a network. The PBCH carries a minimum amount of system information including an indication where the remaining broadcast system information is transmitted.

In LTE, these three signals were also used, the PSS, SSS, and PBCH, although not as being part of one SSB. The three SSB components are always transmitted together in NR, e.g. they have the same periodicity. A given SSB may be repeated within an SS burst set, which can be potentially used for a gNB beam-sweeping transmission. The SS burst set may be confined to a particular time period, such as a 5ms window (half-frame). For initial cell selection, the UE may assume a default SS burst set periodicity of 20 ms.

The 5G NR PSS is a Physical Layer specific signal to identify the radio frame boundary and is type of an m-sequence. The 5G NR SSS is also a Physical-Layer specific signal to identify the subframe boundary and is also an m-sequence. The PSS/SSS sequence is composed of complex values used by each element/sample of the sequence. Information on the current exemplary 5G implementation of the PSS and SSS is available from 3GPP TS 38.211 v17.4.0 sections 7.4.2.2 and 7.4.2.3, including the respective sequence generation and mapping to physical resources.

The time-frequency structure of an SS/PBCH block, carrying the SSS is described in the TS 38.211 section 7.4.3.1. In such an exemplary 5G implementation, in the time domain, an SS/PBCH block consists of 4 OFDM symbols, numbered in an increasing order from 0 to 3. The distribution of the PSS, SSS and PBCH signals within the SS/PBCH block is defined by Table 7.4.3.1-1.

In the frequency domain, an SS/PBCH block consists of 240 contiguous subcarriers, indexed with 0 to 239. The exact subcarriers to be used for each PSS, SSS and PBCH signal within the SS/PBCH block is also defined by Table 7.4.3.1-1.

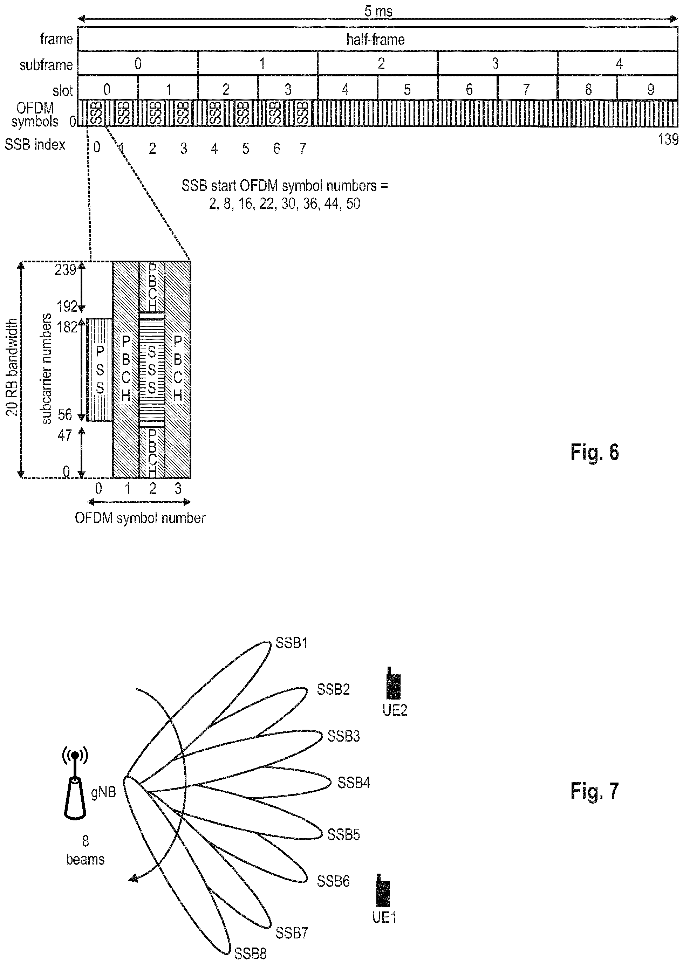

A simplified and exemplary illustration of the SSB according to the above definitions is illustrated in **Fig. 6****,** which shows at the bottom part the PSS, SSS, and PBCH in the time and frequency domain.

The timing (OFDM symbols) at which the SS-blocks (see Fig. 6) are transmitted by the gNB can be defined differently. In particular, the first symbol indexes (within each half-frame with an SSB) with which a candidate SSB starts is determined according to 3GPP 38.213 v17.4.0, section 4.1 "Cell search". An example set of SSBs is illustrated in Fig. 6, assuming start OFDM symbols of 2, 8, 16, 22, 30, 36, 44, and 50 (case of SCS=30 kHz, and frequency > 3 GHz), wherein the relevant OFDM symbol numbering starts with 0 in a half frame. The number of SSBs in a set of SSBs can also be limited to a maximum Lmax. In one example, the SSB set can comprise 4, 8 or 64 SSBs.

The candidate SS/PBCH blocks in a half frame (e.g. termed a set of SSBs) are indexed in an ascending order in time from 0 to *Lmax* - 1. Correspondingly, each SSB within a set of SSBs is assigned a unique number (starting from 0 and increasing by 1).

The SSB set illustrated in Fig. 6 shows a case where all the possible candidate SSBs are indeed transmitted by the base station. However, it is not required to transmit all SSBs. Rather, the gNB, based on some requirements, may select only some of those SSBs within a set of SSBs and transmit those. The SSBs that are actually transmitted by the SSB can be called the SSB pattern. The SSB pattern has basically the same characteristics as the corresponding set of SSBs, including the periodicity.

The gNB informs the UE about the SSB pattern, e.g. which SSBs are in fact transmitted and which are not. This can be done e.g. by the gNB transmitting an SSB bitmap, which defines the SSB pattern, wherein each bit of the SSB bitmap relates to one SSB and identifies whether said SSB is transmitted or not. The length of the SSB bitmap depends on the applicable SSB set, e.g. 4, 8, or 64 bits.

In brief, a set of candidate SSBs is configured for use by the gNB in the cell. Furthermore, among the set of candidate SSBs, the gNB can then select either all or fewer candidate SSBs to actually transmit, called an SSB pattern.

All the SSBs can be transmitted with all beams in the system. Alternatively, the SSBs can be transmitted in different beams, e.g. when SSB beamforming is enabled. In that case, each SSB is transmitted on a different spatial beam, as illustrated in Fig. 7. Similar to the exemplary assumption of Fig. 6, there are 8 SSBs (0-7) which can respectively be transmitted in a different beam, each beam being transmitted in a different beam direction. Therefore, a beam-sweeping form of transmission of the SSBs is achieved; put differently, the sweeping transmission of the beams (and SSBs) is time-division multiplexed and occurs at different times. The two UEs, UE1 and UE2, will receive a different SSB at different times. Each beam has a beam index, e.g. where the beam index corresponds to the SSB index that is transmitted via said beam.

The UE uses the SSBs, and particularly the SSB signals (e.g. the PSS, SSS, PBCH) in different mechanisms, such as for serving cell measurements, time / frequency synchronization etc.

### Reference Signals

Several different types of reference signals (RS) are used for 5G NR (see 3GPP TS 38.211 v17.4.0 section 7.4.1). At least the following reference signals are available in 5G NR:
- CSI-RS, Channel State Information Reference Signal, usable for channel state information acquisition and beam management
- PDSCH DMRS, DeModulation Reference Signal, usable for the PDSCH demodulation
- PDCCH DMRS, DeModulation Reference Signal, usable for the PDCCH demodulation
- PBCH DMRS, DeModulation Reference Signal, usable for the PBCH demodulation
- PTRS, Phase Tracking Reference Signal, usable for phase tracking the PDSCH,
- Tracking Reference Signal, usable for time tracking, also called "CSI-RS for tracking" (see TS 38.214)
- RIM reference signals
- Positioning reference signals

As a DL-only signal, the CSI-RS, which the UE receives, can be used by the UE to estimate the channel and to report channel quality information back to the gNB (assists the gNB in modulation coding scheme selection, resource allocation, beamforming, MIMO rank selection). The CSI-RS can be configured for periodic, aperiodic (e.g. DCI triggered), or semi-persistent transmission by the gNB. The CSI-RS also can be used for interference measurement (IM) and fine frequency/time tracking purposes. Specific instances of CSI-RS can be configured for time/frequency tracking and mobility measurements. During MIMO operations, NR may use different antenna approaches based on the carrier frequency. At lower frequencies, the system uses a modest number of active antennas for MU-MIMO and adds FDD operations. In this case, the UE may use the CSI-RS to calculate the CSI and report it back in the UL direction.

The CSI-RS is UE-specific; nonetheless, multiple users can share the same CSI-RS resource. In particular, a UE-specific configuration of a CSI-RS does not necessarily mean that a transmitted CSI-RS can only be used by a single device, rather the same set of CSI-RS resources can be separately configured for multiple devices, which means that a single CSI-RS can be shared among multiple devices.

A configured CSI-RS may correspond to up to 32 antenna ports, each corresponding to a channel to be sounded. Depending on the number of antenna ports, there can be a single-port CSI-RS or a multi-port CSI-RS. A single-port CSI-RS occupies a single resource element within a resource block in the frequency domain and one slot in the time domain. On the other hand, for a multi-port CSI-RS, multiple orthogonally transmitted per-antenna-port CSI-RS, share the overall set of resource elements assigned for the configured multi-port CSI-RS. The sharing can be based on combinations of two or more of:
- Code domain multiplexing (CDM), based on using different orthogonal patterns,
- Frequency domain multiplexing (FDM), based on using different subcarriers within an OFDM symbol, and
- Time domain multiplexing (TDM), based on using different OFDM symbols within a slot.

While the CSI-RS can be configured to occur anywhere in the resource block, in practice it is possible to impose some restrictions on the CSI-RS resource assignment so as to avoid collisions with other downlink physical channels and signals. As an example, the transmission of a configured CSI-RS can be such that it does not collide with a CORESET configured for the device, the DM-RS associated with the PDSCH transmissions and the SS block transmissions.

The 5G NR standard supports flexible CSI-RS configurations. In the time domain, the CSI-RS resource may start at any OFDM symbol of a slot and span 1, 2, or 4 OFDM symbols, e.g. depending on the number of configured antenna ports.

According to one example, system information signaling (e.g. one of the system information blocks) may provide the configuration of the TRS and/or the CSI-RS occasion(s) for idle and/or inactive UE(s). It may be possible that, in addition to system information, other signaling methods are supported to configure the TRS/CSI-RS occasions, e.g. dedicated RRC messages, e.g. the RRC release message.

In one exemplary 5G NR implementation, a table (see e.g. TS 38.211, table 7.4.1.5.3-1) defines a set of candidate CSI-RS configurations, wherein each candidate CSI-RS configuration defines a set of resource elements (within a slot) on which the reference signal is transmitted. The different CSI-RS configurations differ from one another, e.g. in the number of ports, in the density and/or the cdm-type (code division multiplexing type). The gNB can inform the UE which CSI-RS the gNB is currently transmitting, using the IE *CSI-RS-ResourceMapping* that configures the resource element mapping of a CSI-RS resource in the time- and frequency domain.

### Beam management

Beam management is a set of Layer 1 (PHY) and Layer 2 (MAC) procedures to establish and retain an optimal beam pair for good connectivity. A beam pair e.g. consists of a transmit beam and a corresponding receive beam in one link direction.

Before a UE can communicate with the network, it must perform cell search and selection procedures and obtain initial cell synchronization and system information. The first steps in that process are acquiring frame synchronization, finding out the cell identity and decoding the MIB and SIB1.

In the case of a multi-antenna system that transmits multiple beams, detecting the beams from the gNB is also a part of the initial procedure (e.g. where the UE normally detects all the beams in the search space).

Beam management can be categorized into three main procedures:
- initial beam establishment,
- beam adjustment (also called beam tracking and refining), and
- beam failure recovery, details of which will be described below.

### Channel State Information measurement framework

The network may configure a UE to perform measurements and report them in accordance with the configuration parameters. The measurement and reporting done by a UE can be for instance based on the CSI reporting framework of 5G NR, which generally can be considered to involve two parts, one for configuration and another one for the triggering of the CSI reporting.

The *CSI-MeasConfig* IE is the highest-level IE for CSI configuration and configures not just L1-RSRP-related measurement/reporting for beam management, but also conventional CSI-related measurement/reporting (such as CQI) to determine proper MIMO precoding, modulation and coding, etc.

Mainly three types of lists are configured by the *CSI-MeasConfig* IE:
1) List of RS resource sets
   - Each RS resource set in the list contains one or multiple RS resources. E.g. multiple CSI-RS resources can be configured e.g. by a *NZP-CSI-RS-Resource* IE and then grouped into a RS resource set by a *NZP-CSI-RS-ResourceSet* IE. Other possible RS resources are defined by the lEs *CSI-IM-Resource,* and *SSB-Index.*
2) List of *CSI-ResourceConfig* I Es
   - Different *CSI-ResourceConfig* in the list can contain one or more different RS resource sets, chosen from List element 1). This may include NZP-CSI-RS-*ResourceSet, CSI-IM-ResourceSet,* and/or *CSI-SSB-ResourceSet,* respectively identified by suitable IDs (see e.g. *NZP-CSI-RS-ResourceSetId, CSI-IM-ResourceSetId,* and/or *CSI-SSB-ResourceSetId)*
3) List of CSI-ReportConfig lEs.
   - Different *CSI-ReportConfig* in the list configure different CSI report instances. This is the Information Element which links the reporting configuration of this CSI-*ReportConfig* (such as by PUCCH or PUSCH) to the measurement resource sets (i.e. one *CSI-ResourceConfig* in the above List element 2). *CSI-ResourceConfigID,* being included in the *CSI-ReportConfig* IE, identifies a *CSI-ResourceConfig* IE to be used.

Measurements and reporting can be carried out on a periodic, semi-periodic or aperiodic basis in the time domain. The measurements results are reported by the UE to the gNB, e.g. as uplink control information on the PUCCH or the PUSCH. In one 5G-compliant example, the CSI reporting is performed by the UE based on the definitions given in 3GPP TS 38.212 v17.5.0, in section 6.3.

In present 3GPP 5G systems, there are two types of reference signals that can be used for the measurements, the SSB (see above mentioned *SSB-Index*) and the CSI-RS (Channel State Information-Reference Signals; see above *NZP-CSI-RS-Resource* IE and *CSI-IM-Resource* IE). The SSB is always transmitted by the network and is not specific to a UE and is thus unflexible. For instance, the SSB can be used in connection with a comparatively wide beam. On the other hand, the CSI-RS can be specifically configured for a UE, and is quite flexible regarding when and how often it is transmitted (time domain) and regarding the frequency-domain resources. The CSI-RS can be used in connection with a comparatively narrow beam, because it can be configured for only one or a few UEs.

There are several reporting components of CSI in 5G NR (i.e. several different types of CSI), e.g. based on 3GPP TS 38.214 - section 5.2.1 thereof:.
- CQI (Channel Quality Information)
- PMI (Precoding Matrix Indicator)
- CRI (CSI-RS Resource Indicator)
- SSBRI (SS/PBCH Resource Block Indicator)
- LI (Layer Indicator)
- RI (Rank Indicator)
- L1-RSRP, and/or
- Capability Index

One or more or a combination of different metrics can be reported by the UE. Generally, the metrics can be grouped into two types:
- L1-RSRP-related quantities (e.g. cri-RSRP and ssb-Index-RSRP, see later IE *CSI-Report Config)*
- CSI-related quantities (e.g. the rest from the IE *CSI-Report Config*)

The L1-RSRP-related quantities are new ones introduced for the first time in NR (Rel-15), and one of their purposes is to facilitate beam management. By contrast, the CSI-related quantities (such as CQI) are traditional ones, existing in LTE already. Those traditional CSI-related quantities can be used by the base station to choose e.g. the proper MIMO precoding, modulation and coding size, etc. to match the channel condition.

An exemplary implementation follows current definitions of the 5G 3GPP standards, such as defined in 3GPP TS 38.331, and may involve e.g. the following Information Elements (IE):
*CellGroupConfig, CSI-MeasConfig, CSI-ReportConfig, CSI-ResourceConfig, NZP-CSI-RS-Resource,* and *NZP-CSI-RS-ResourceSet.*

In brief, the measurement and reporting for the LTM can be based on the CSI reporting framework of 5G. In particular, the Information Element (IE) *CSI-MeasConfig* and the Information Element *CSI-ReportConfig* indicate parameters of the CSI reporting framework usable by the UE to measure and then report the measurement results.

One possible following sequence of lEs for defining measurement and report according to the CSI framework is presented in the following:

```
   - CellGroupConfig IE
           ∘ the ServingCellConfig IE of SpCellConfig or of SCellConfig
                  ▪ CSI-MeasConfig IE
                         • CSI-ResourceConfig IE
                                ∘ NZP-CSI-RS-ResourceSet
                                       ▪ NZP-CSI-RS-Resource
                                ∘ CSI-SSB-ResourceSet
                                       ▪ SSB-Index
                                ∘ CSI-IM-ResourceSet
                                       ▪ CSI-IM-Resource
                         • CSI-ReportConfig IE
```

The following exemplary definition of the IE *CellGroupConfig* is obtained from the 3GPP TS 38.331, section 6.3.2:

### - CellGroupConfig

The *CellGroupConfig* IE is used to configure a master cell group (MCG) or secondary cell group (SCG). A cell group comprises of one MAC entity, a set of logical channels with associated RLC entities and of a primary cell (SpCell) and one or more secondary cells (SCells).

### CellGroupConfig information element

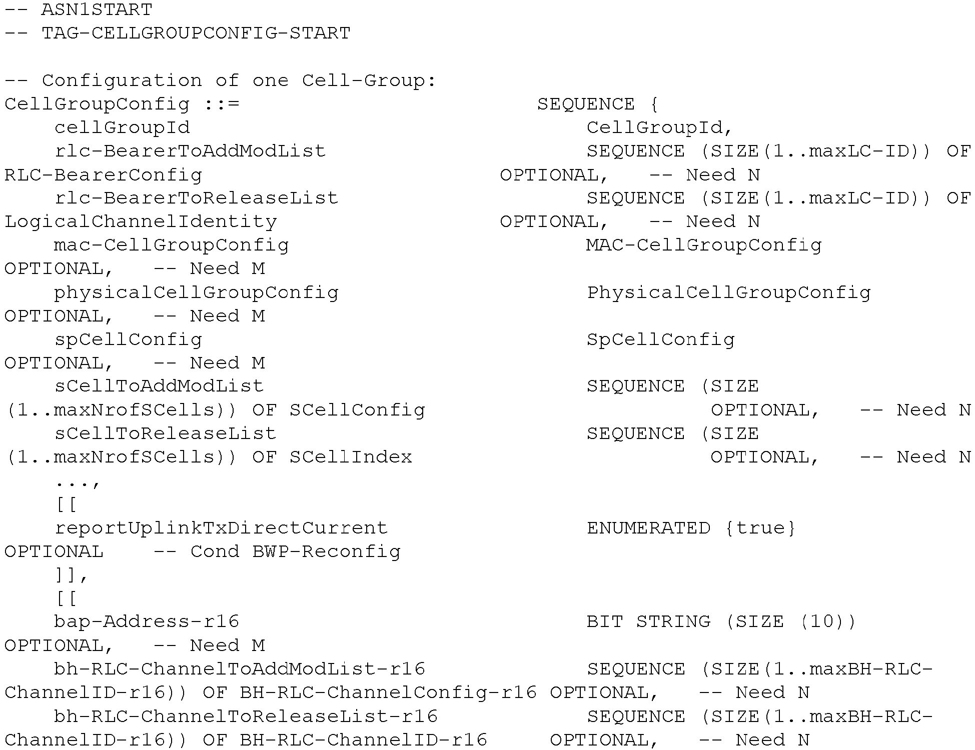

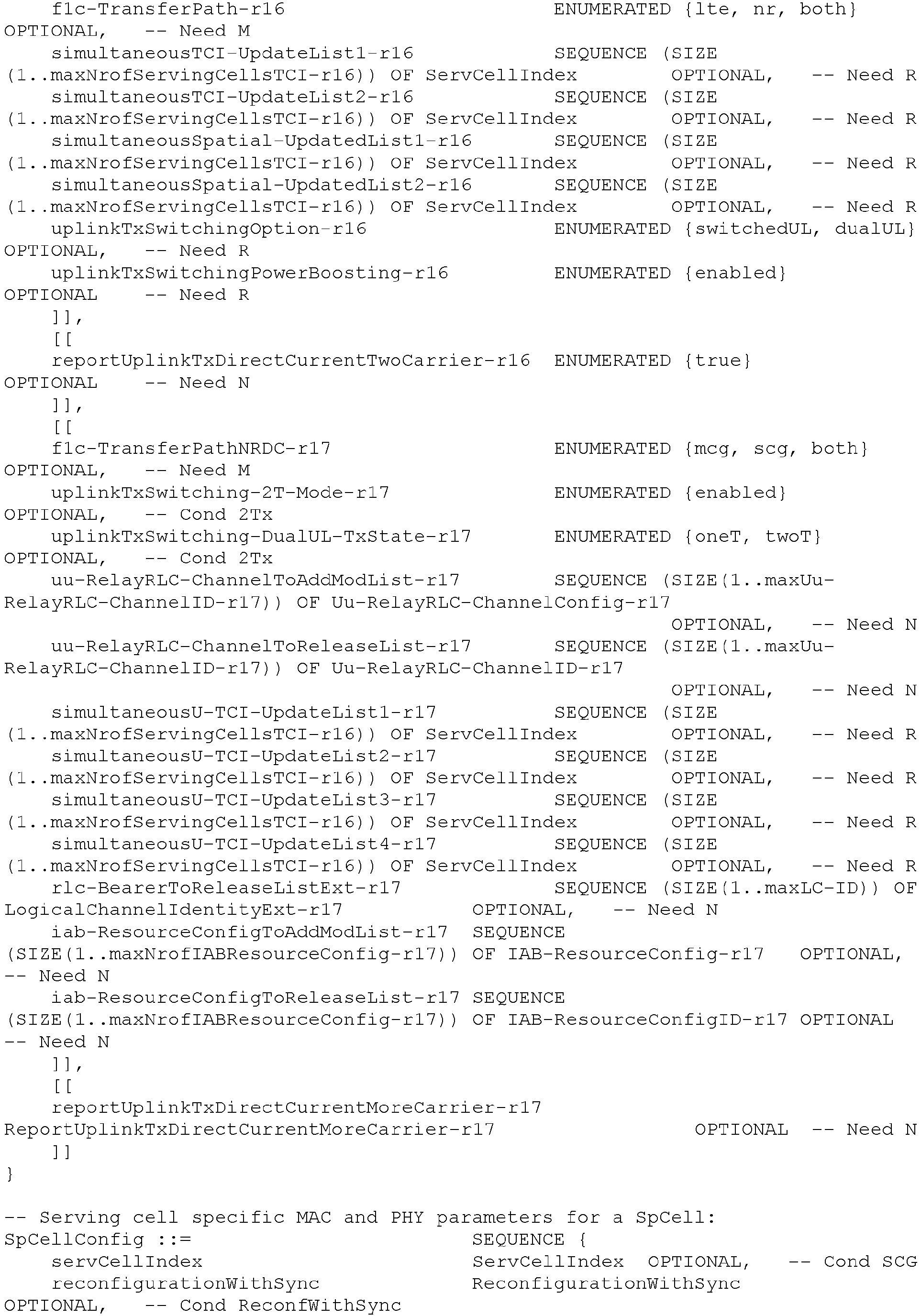

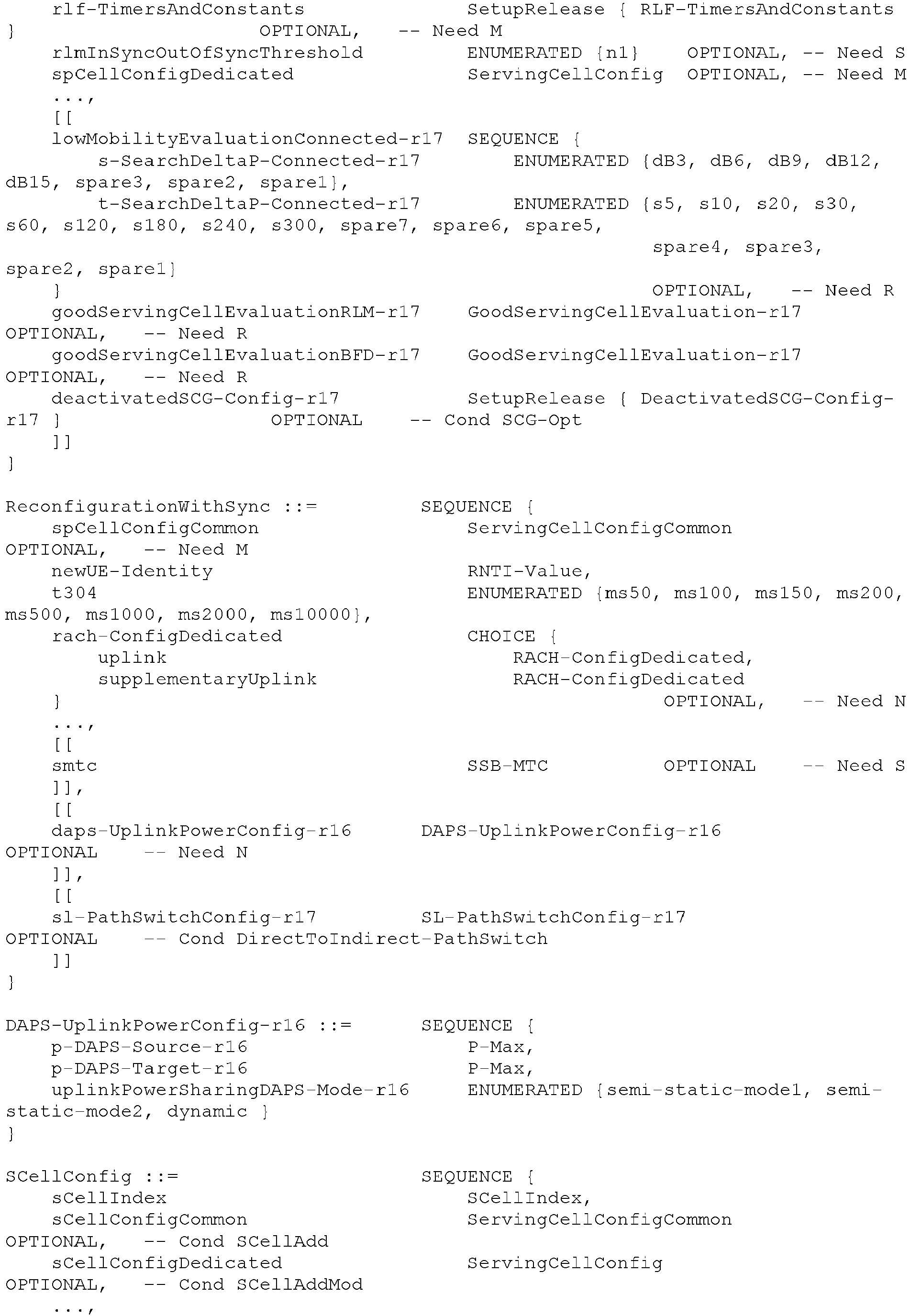

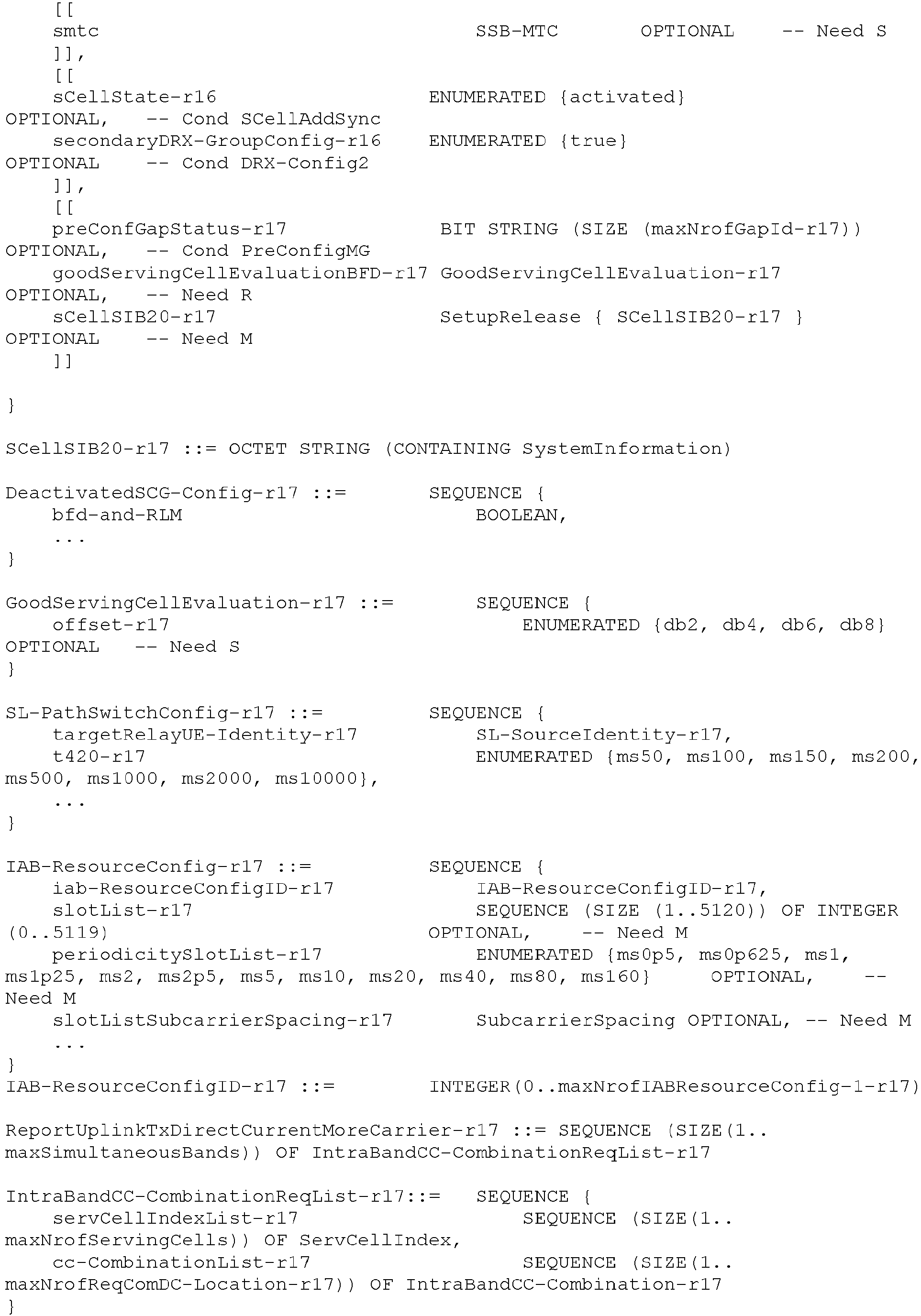

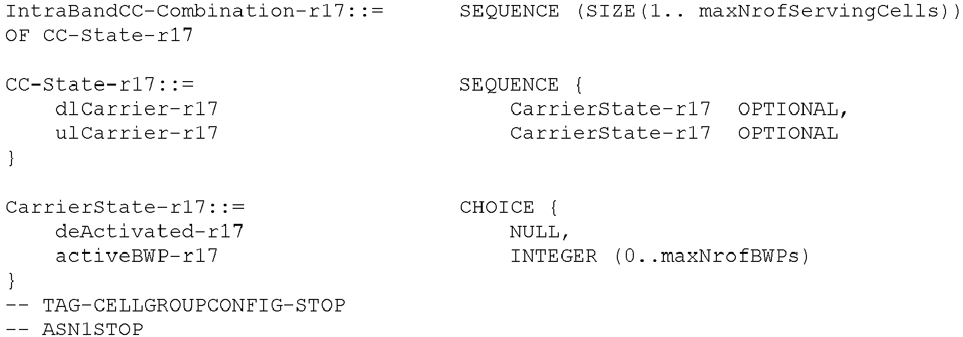

The definitions of the above field and parameters of the *CellGroupConfig* IE are in 3GPP TS 38.331. Relevant ones thereof include the ServingCellConfig and the ServingCellConfigCommon:

| ***CellGroupConfig* field descriptions** |
|---|
| ***spCellConfig*** |
| Parameters for the SpCell of this cell group (PCell of MCG or PSCell of SCG). |

The following exemplary definition of the IE *CSI-MeasConfig* is obtained from the 3GPP TS 38.331, section 6.3.2:

### - CSI-MeasConfig

The IE *CSI-MeasConfig* is used to configure CSI-RS (reference signals) belonging to the serving cell in which *CSI-MeasConfig* is included, channel state information reports to be transmitted on PUCCH on the serving cell in which *CSI-MeasConfig* is included and channel state information reports on PUSCH triggered by DCI received on the serving cell in which *CSI-MeasConfig* is included. See also TS 38.214 [19], clause 5.2.

### CSI-MeasConfig information element

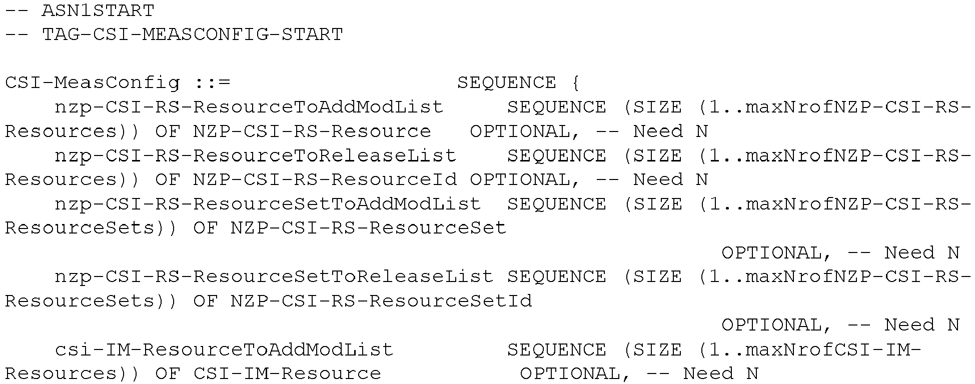

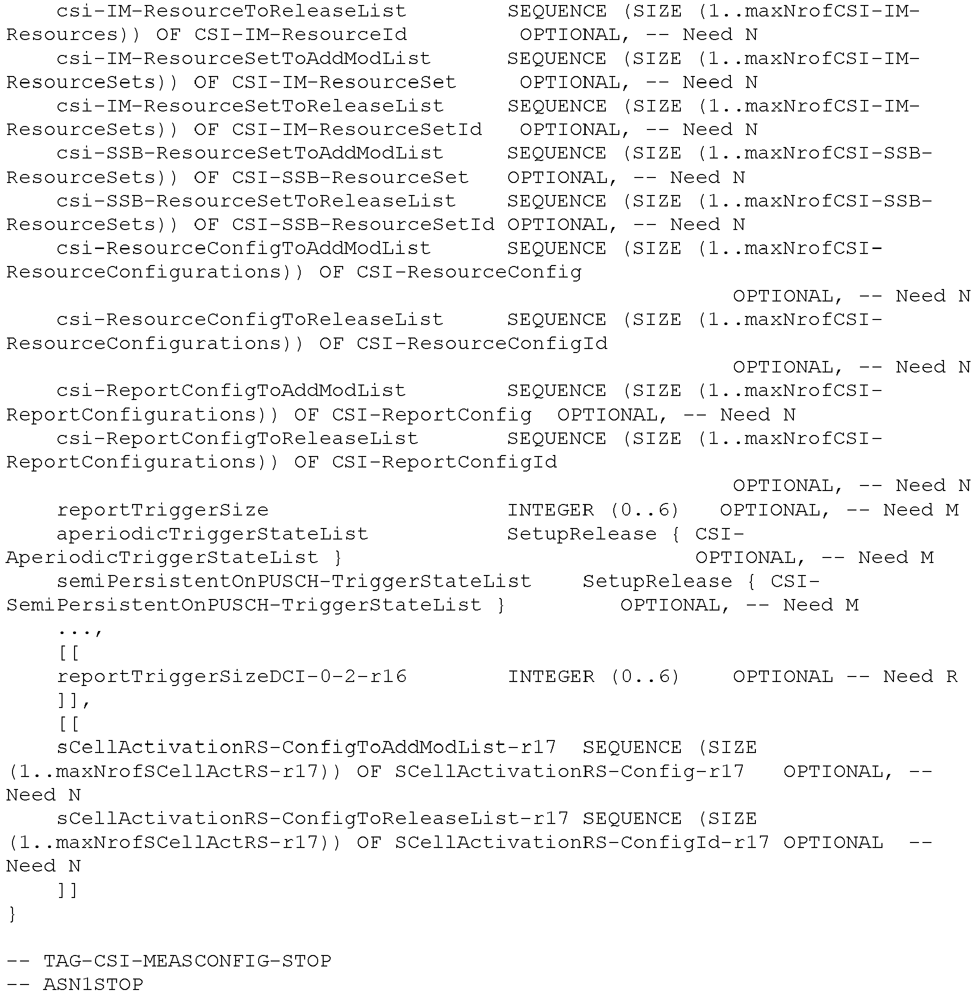

The definitions of the above field and parameters of the *CSI-MeasConfig* IE are in 3GPP TS 38.331. Relevant ones thereof include the following:

| ***CSI-MeasConfig* field descriptions** |
|---|
| ***csi-ReportConfigToAddModList*** |
| Configured CSI report settings as specified in TS 38.214 [19] clause 5.2.1.1. |
| ***csi-ResourceConfigToAddModList*** |
| Configured CSI resource settings as specified in TS 38.214 [19] clause 5.2.1.2. |
| ***csi-SSB-ResourceSetToAddModList*** |
| Pool of CSI-SSB-ResourceSet which can be referred to from *CSI-ResourceConfig.* |
| ***nzp-CSI-RS-ResourceSetToAddModList*** |
| Pool of *NZP-CSI-RS-ResourceSet* which can be referred to from *CSI-ResourceConfig* or from MAC CEs. |

The following exemplary definition of the IE *CSI-ReportConfig* is obtained from the 3GPP TS 38.331:

### - CSI-ReportConfig

The IE *CSI-ReportConfig* is used to configure a periodic or semi-persistent report sent on PUCCH on the cell in which the *CSI-ReportConfig* is included, or to configure a semi-persistent or aperiodic report sent on PUSCH triggered by DCI received on the cell in which the *CSI-ReportConfig* is included (in this case, the cell on which the report is sent is determined by the received DCI). See TS 38.214 [19], clause 5.2.1.

### CSI-ReportConfig information element

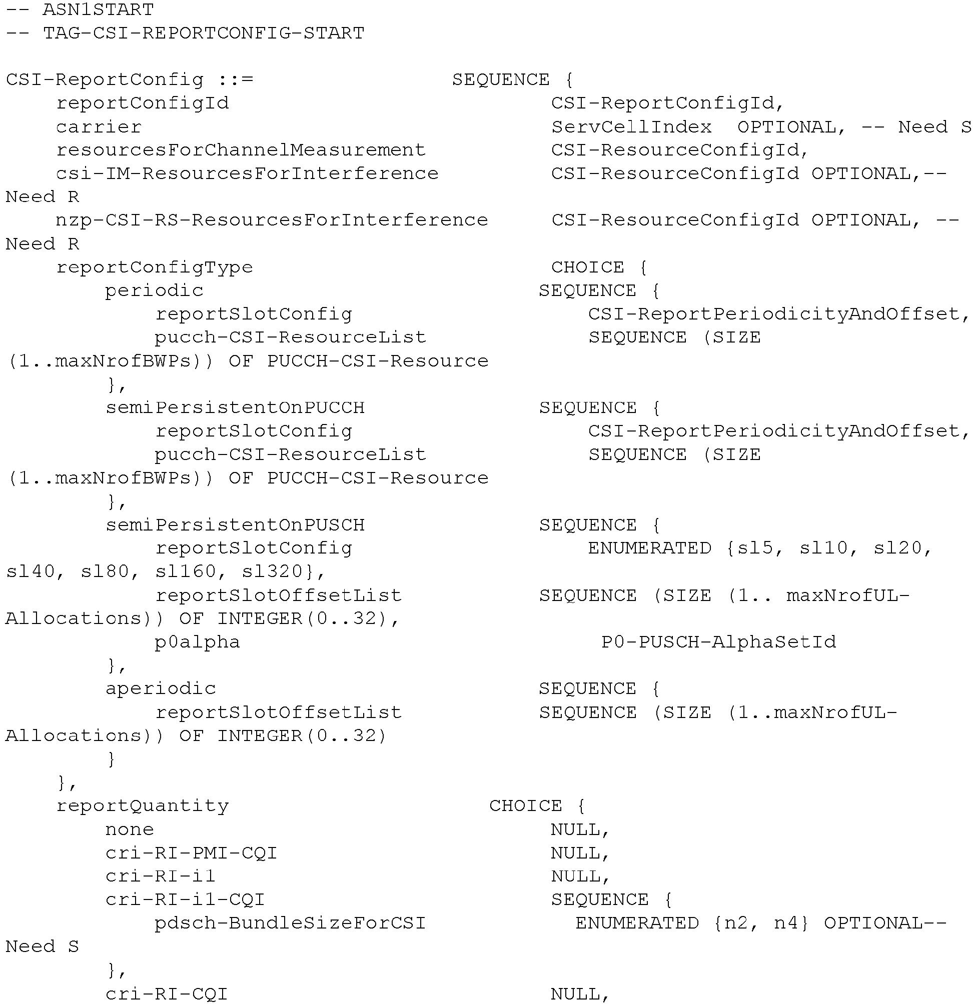

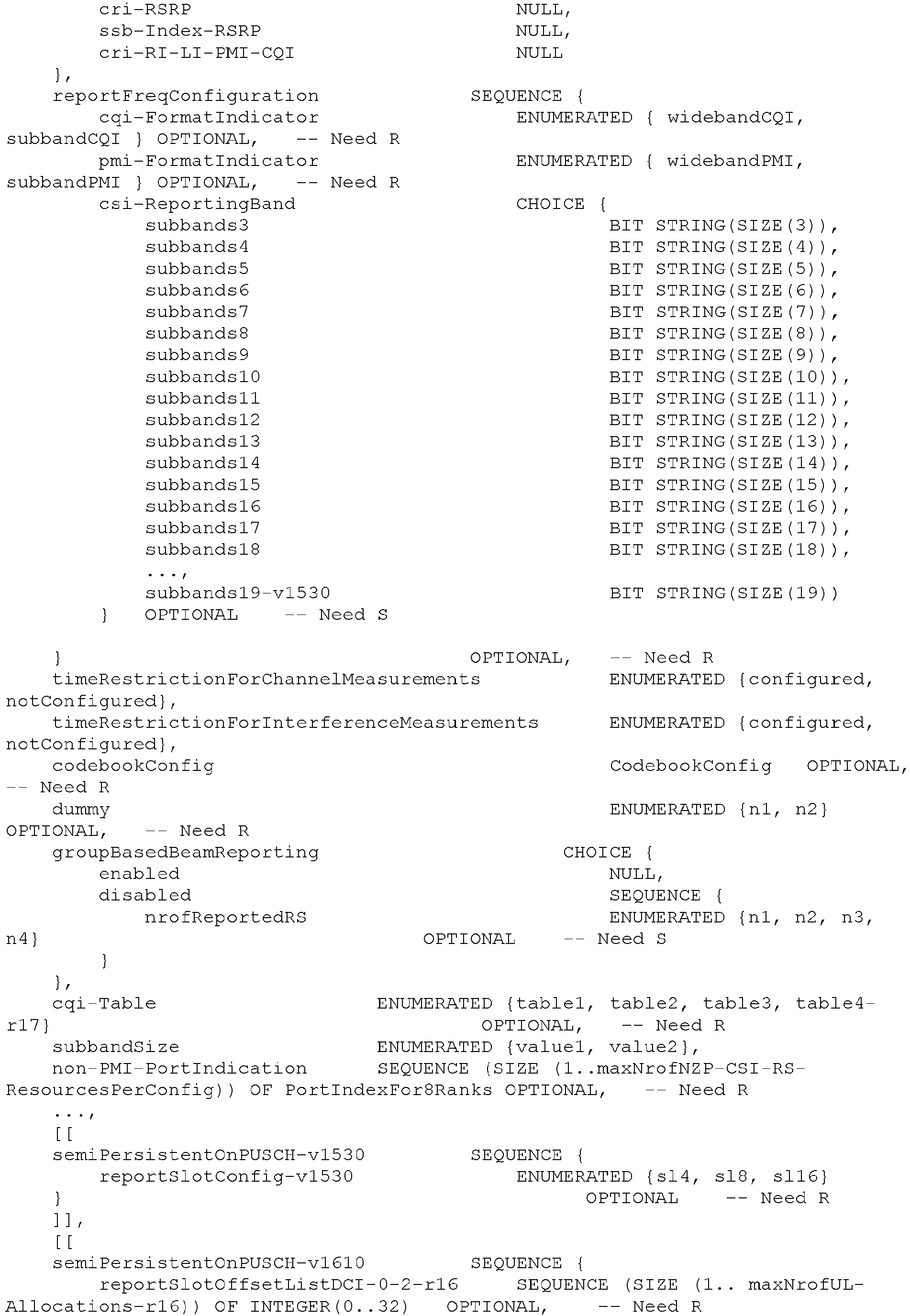

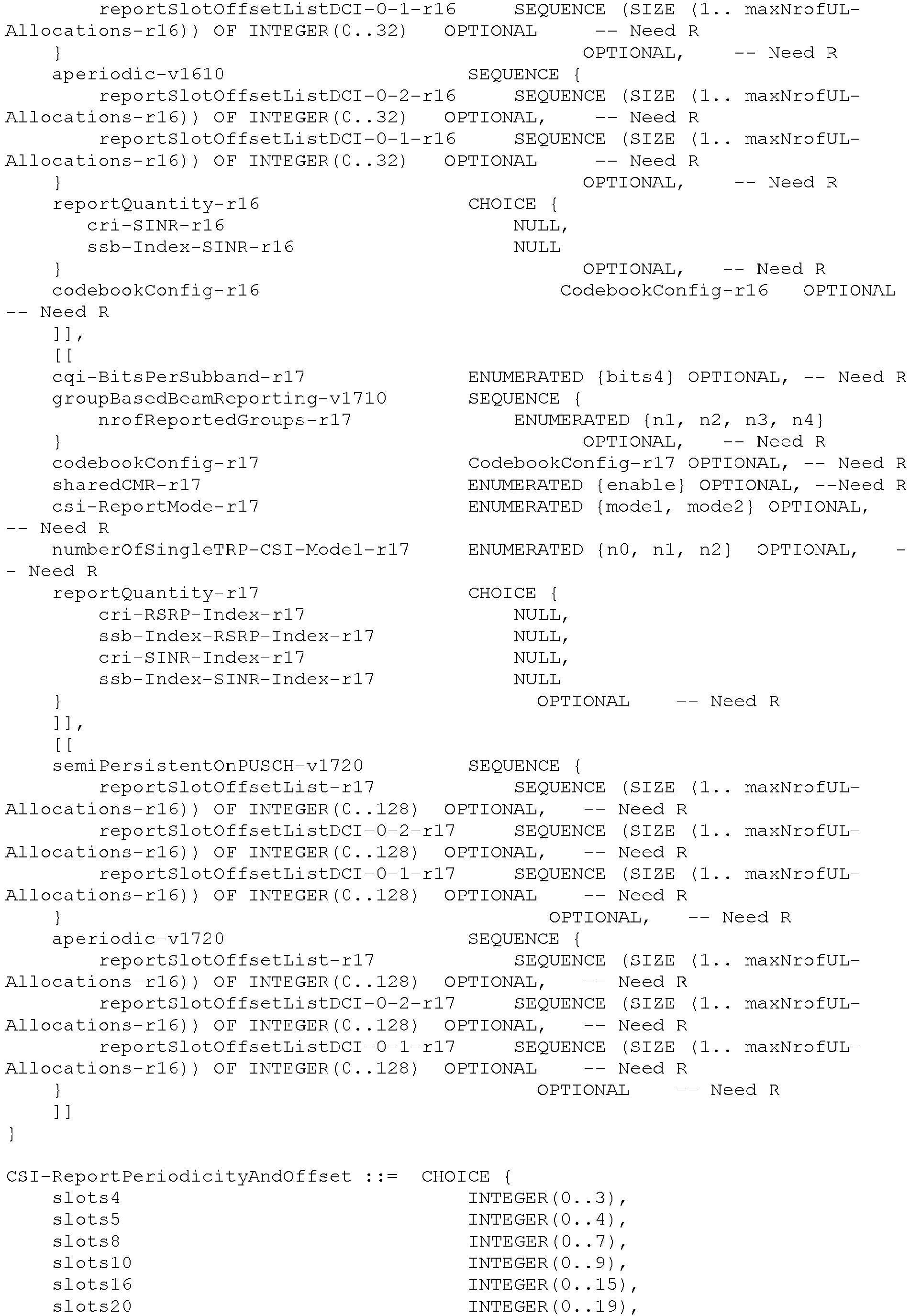

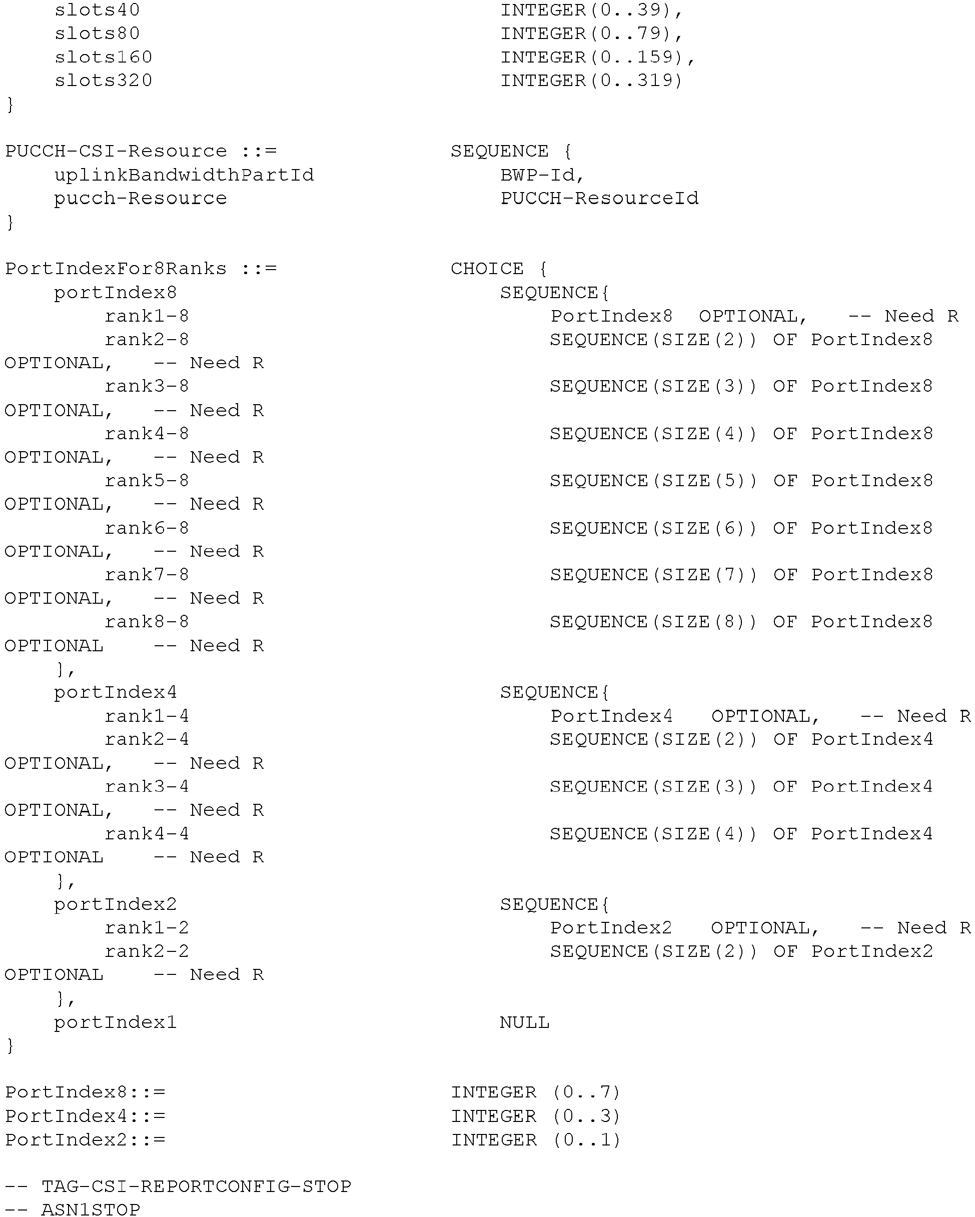

The definitions of the above field and parameters of the *CSI-ReportConfig* IE are in 3GPP TS 38.331. Relevant ones thereof include the following:

| ***CSI-ReportConfig* field descriptions** |
|---|
| ***resourcesForChannelMeasurement*** |
| Resources for channel measurement. *csi-ResourceConfigId* of a *CSI-ResourceConfig* included in the configuration of the serving cell indicated with the field "carrier" above. The *CSI-ResourceConfig* indicated here contains only NZP-CSI-RS resources and/or SSB resources. This *CSI-ReportConfig* is associated with the DL BWP indicated by *bwp-Id* in that *CSI-ResourceConfig.* |

The following exemplary definition of the IE *CSI-ResourceConfig* is obtained from the 3GPP TS 38.331, section 6.3.2:

### - CSI-ResourceConfig

The IE *CSI-ResourceConfig* defines a group of one or more *NZP-CSI-RS-ResourceSet, CSI-IM-ResourceSet* and/or *CSI-SSB-ResourceSet.*

### CSI-ResourceConfig information element

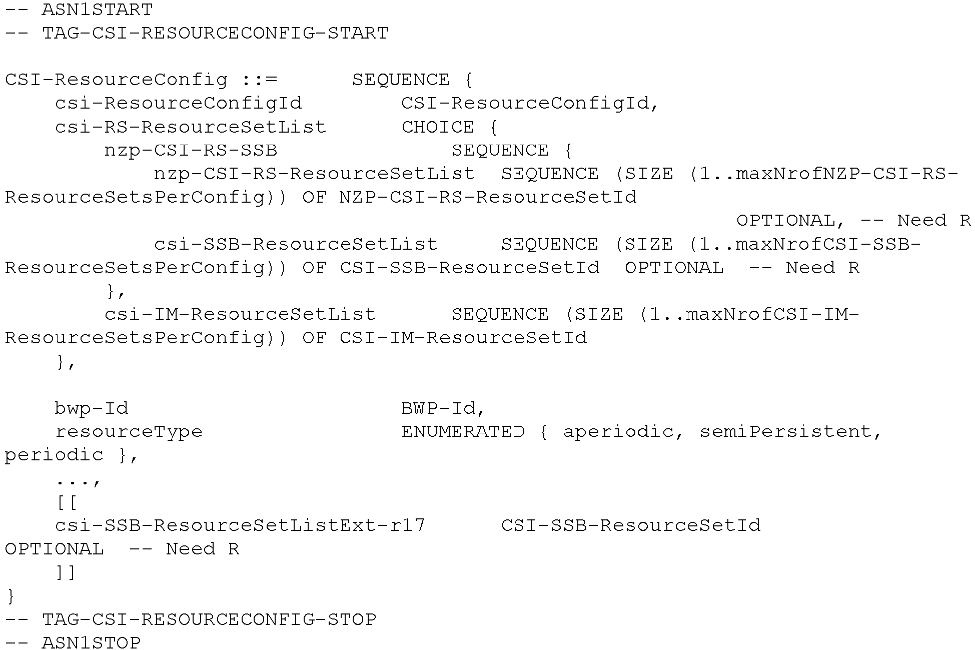

The definitions of the above field and parameters of the *CSI-ResourceConfig* IE are in 3GPP TS 38.331. Relevant ones thereof include the following:

| ***CSI-ResourceConfig* field descriptions** |
|---|
| ***csi-SSB-ResourceSetList, csi-SSB-ResourceSetListExt*** |
| List of references to SSB resources used for CSI measurement and reporting in a CSI-RS resource set (see TS 38.214 [19], clause 5.2.1.2). If *groupBasedBeamReporting-v1710* is configured in the IE *CSI-ReportConfig* that indicates this *CSI-ResourceConfig* as *resourceForChannelMeasurement,* the network configures 2 resource sets, which may be two NZP CSI-RS resource sets, two CSI SSB resource sets or one NZP CSI-RS resource set and one CSI-SSB resource set (see TS 38.214 [19], clause 5.2.1.2 and 5.2.1.4.2). In this case, in TS 38.212 [17] Table 6.3.1.1.2-8B: |
| - if the list has one CSI-SSB resource set, this resource set is indicated by a resource set indicator set to 1, while the resource set indicator of the *NZP CSI-RS resource* set is 0; |
| - if the list has two CSI-SSB resource sets, the first resource set is indicated by a resource set indicator set to 0 and the second resource set by a resource set indicator set to 1. |
| ***nzp-CSI-RS-ResourceSetList*** |
| List of references to NZP CSI-RS resources used for beam measurement and reporting in a CSI-RS resource set. Contains up to *maxNrofNZP-CSI-RS-ResourceSetsPerConfig* resource sets if *resource Type* is 'aperiodic'. Otherwise, contains 1 resource set when *groupBasedBeamReporting-v1710* is not configured in IE *CSI-ReportConfig.* If *groupBasedBeamReporting-v1710* is configured and *resourceType* is set to 'periodic' or 'semipersistent', then the network configures 2 resource sets, which may be two NZP CSI-RS resource sets, two CSI SSB resource sets or one NZP CSI-RS resource set and one CSI-SSB resource set (see TS 38.214 [19], clause 5.2.1.2 and 5.2.1.4.2). In this case, in TS 38.212 [17] Table 6.3.1.1.2-8B, the following applies: |
| - if the list has one NZP CSI-RS resource set, this resource set is indicated by a resource set indicator set to 0; |
| - if the list has two NZP CSI-RS resource sets, the first resource set is indicated by a resource set indicator set to 0 and the second resource set by a resource set indicator set to 1. |

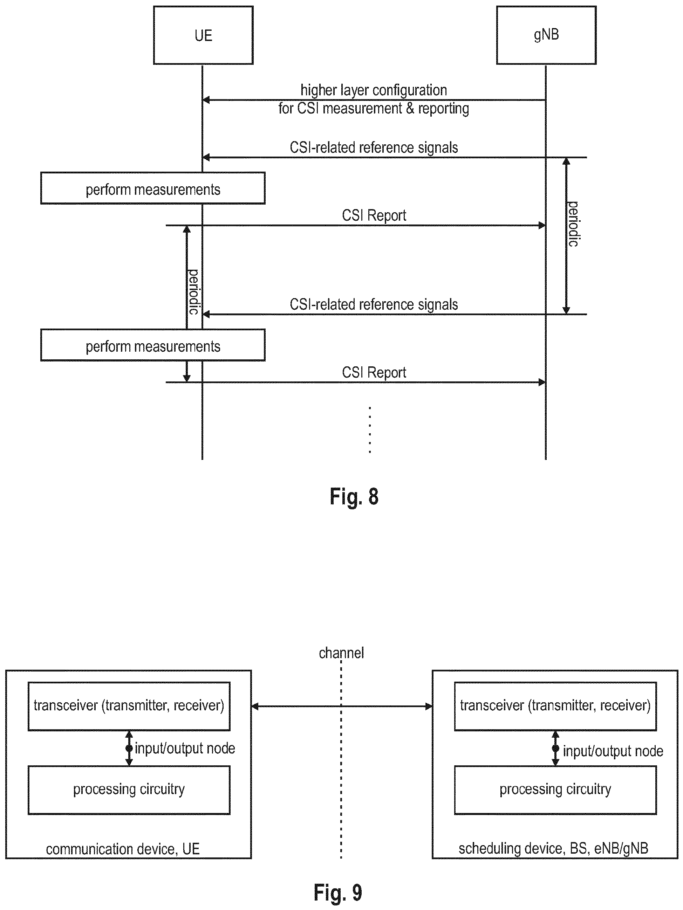

**Fig. 8** illustrates an exemplary and simplified signaling exchange for a measurement reporting, assuming a periodic transmission of the reference signals and the report. As apparent therefrom, the gNB configures the UE for the measurement and reporting (e.g. as described above). The UE follows this configuration for the measurement and reporting processing. The gNB transmits the reference signals, and the UE performs the configured measurements on the received reference signals and generates the CSI report, which is then transmitted to the gNB. This can be repeatedly performed, e.g. periodically as configured.

### Network Energy Saving

Network energy saving is of great importance for environmental sustainability, to reduce environmental impact and for operational cost savings. 3GPP is currently studying network energy saving for Release 18 and has approved a new work item . During a previous study phase, a network energy consumption model for the base station was defined, and potential network energy saving techniques can be classified into different domains, including time, frequency, spatial and power domain. The techniques in time and frequency domains mainly aim to reduce the power consumption for a dynamic part by trying to shut down more symbols on one or more carriers to achieve BS micro sleep. The techniques in the spatial and power domains mainly aim to reduce the power consumption of the TRX (transmission) chains and PAs (power amplifiers) by trying to shut down more spatial elements and/or reduce transmission power/power spectrum density, or increase the PA efficiency.

One objective of the new work item is to specify the following techniques in the spatial and power domains:
- Specify necessary enhancements on CSI and beam management related procedures including measurement and report, and signaling to enable efficient adaptation of spatial elements (e.g. antenna ports, active transceiver chains) [RAN1, RAN2]
- Specify necessary enhancements on CSI related procedures including measurement and report, and signaling to enable efficient adaptation of power offset values between PDSCH and CSI-RS [RAN1, RAN2]
- Note: Above objectives are only for UE specific channels/signals
- Note: Legacy UE CSI/CSI-RS capabilities apply when considering total number of CSI reports and requirements

### Further Improvements

To support network energy saving, the UE may need to report multiple CSIs in one or multiple occasions, based on multiple hypothetical antenna and/or transmission power settings.

Therefore, the required number of CSI reports can increase and be more than for conventional MIMO techniques, such that UE side measurement, CSI processing and CSI control overhead can be highly demanding for the UE, which may require a high UE capability, power consumption and system overhead.

The inventors thus identified the possibility to define an improved CSI measurement and reporting procedure for facilitating to avoid or mitigate one or more of the above described disadvantages. The present invention relates to different solutions and variants for such an improved CSI measurement and reporting procedure.

For example, multiple-CSI reporting rules could be defined to achieve one or multiple of the below merits:
- Flexible spatial adaptation pattern(s) indication used for multiple-CSI report
- CSI measurement and processing complexity reduction
- CSI report overhead reduction
- CPU occupancy (Definition in TS38.214 Sec 5.2.1.6) alleviation
   ∘ CPU (CSI Processing Unit) occupancy depends on e.g. the CSI report type and the number of CSls to report
   ∘ CPU occupancy time depends on e.g. the CSI reference resource duration, PDCCH triggering timing (only for aperiodic CSI and the initial SPS-CSI), and transmission timing of PUSCH/PUCCH carrying the report.
- More flexible multiple-CSI report resource allocation in one or more reporting occasions.

### Embodiments

In the following, UEs, base stations, and respective procedures to meet these needs will be described for the new radio access technology envisioned for the 5G mobile communication systems, but which may also be used in previous LTE-based mobile communication systems or future (e.g. 6G) mobile communication systems. Different implementations and variants will be explained as well. The following disclosure was facilitated by the discussions and findings as described above and may for example be based at least on part thereof.

In general, it should be noted that many assumptions have been and are made herein so as to be able to explain the principles underlying the present disclosure in a clear, concise and understandable manner. These assumptions are however to be understood merely as examples made herein for illustration purposes, which are not necessarily essential for the invention and should thus not limit the scope of the disclosure. A skilled person will be aware that the principles of the following disclosure and as laid out in the claims can be applied to different scenarios and in ways that are not explicitly described herein.

Moreover, some of the terms of the procedures, entities, layers etc. used in the following are closely related to LTE/LTE-A systems or to terminology used in the current 3GPP 5G standardization, even though specific terminology to be used in the context of the new radio access technology for the next communication systems may not be fully decided yet or might finally change. Thus, terms could be changed in the future, without affecting the functioning of the respective features and solutions. Consequently, a skilled person is aware that the solutions and their scope of protection should not be restricted to particular terms exemplarily used herein for lack of newer or finally agreed terminology, but should be more broadly understood in terms of functions and concepts that underlie the solutions explained in the present disclosure.

For instance, a **mobile station** or **mobile node** or **user terminal** or **user equipment (UE)** is a physical entity (physical node) within a communication network. One node may have several functional entities. A functional entity refers to a software or hardware module that implements and/or offers a predetermined set of functions to other functional entities of the same or another node or the network. Nodes may have one or more interfaces that attach the node to a communication facility or medium over which nodes can communicate. Similarly, a network entity may have a logical interface attaching the functional entity to a communication facility or medium over which it may communicate with other functional entities or correspondent nodes.

The term **"base station"** or **"radio base station"** here refers to a physical entity within a communication network. As with the mobile station, the base station may have several functional entities. A functional entity refers to a software or hardware module that implements and/or offers a predetermined set of functions to other functional entities of the same or another node or the network. The physical entity performs some control tasks with respect to the communication device, including one or more of scheduling and configuration. It is noted that the base station functionality and the communication device functionality may be also integrated within a single device. For instance, a mobile terminal may implement also functionality of a base station for other terminals. The terminology used in LTE is eNB (or eNodeB), while the currently used terminology for 5G NR is gNB. Moreover, the base station may also be gNB in a Non-Terrestrial Network (NTN) NR system.

Communication between the UE and the base station is typically standardized and may be defined by different layers, such as PHY, MAC, RRC etc. (see above background discussion).

The term **"candidate resource configuration"** of a reference signal can also be replaced by other terminology, such as "a spatial adaptation pattern", "a reference signal resource pattern" (e.g. "CSI-RS resource pattern"), or "a reference signal resource configuration".

**Fig. 9** illustrates a general, simplified and exemplary block diagram of a user equipment (also termed communication device) and a scheduling device (here exemplarily assumed to be located in the base station, e.g., the LTE eNB (alternatively termed ng-eNB) or the gNB in 5G NR). The UE and eNB/gNB are communicating with each other over a (wireless) physical channel respectively using the transceiver.

The communication device may comprise a transceiver and processing circuitry. The transceiver in turn may comprise and/or function as a receiver and a transmitter. The processing circuitry may be one or more pieces of hardware such as one or more processors or any LSIs. Between the transceiver and the processing circuitry there is an input/output point (or node) over which the processing circuitry, when in operation, can control the transceiver, i.e., control the receiver and/or the transmitter and exchange reception/transmission data. The transceiver, as the transmitter and receiver, may include the RF (radio frequency) front including one or more antennas, amplifiers, RF modulators/demodulators and the like. The processing circuitry may implement control tasks such as controlling the transceiver to transmit user data and control data provided by the processing circuitry and/or receive user data and control data, which is further processed by the processing circuitry. The processing circuitry may also be responsible for performing other processes such as determining, deciding, calculating, measuring, etc. The transmitter may be responsible for performing the process of transmitting and other processes related thereto. The receiver may be responsible for performing the process of receiving and other processes related thereto, such as monitoring a channel.

The present invention relates to four different solutions (and respective variants) of an improved CSI measurement and reporting procedure.

In connection with these solutions, improved UEs, improved base stations and improved integrated circuits are presented, which participate separately or together in the improved CSI measurement and reporting procedures. Corresponding methods for the UE behavior and the base station behavior are provided as well. The integrated circuits may correspond to the UE and base station, and respectively their behavior.

As an overview, the First Solution is directed to first providing several candidate resource configurations of a reference signal that can be transmitted by a base station, wherein the base station then instructs the UE to follow one or more among the several candidate resource configurations that were previously configured.

The Second Solution is directed to first providing reporting configurations with several sub-configurations regarding how the reporting of measurement results can be configured. Then, the base station may instruct the UE to follow one or more of the sub-configurations among all that were previously configured.

The Third Solution is directed to defining an improved priority determination rule for prioritizing measurement results, generated based on sub-configurations of a reporting configuration (e.g. the sub-configurations of the Second Solution).

The Fourth Solution is directed to defining an improved dropping rule for not transmitting measurement results.

The following solutions can be based on some or a combination of the different mechanisms described above in context of the exemplary 3GPP 5G-NR implementations, including e.g. the use of the signaling mechanisms for configuring the 5G NR measurement reporting (e.g. using information elements for measurement configuration and reporting), as currently defined in 3GPP.

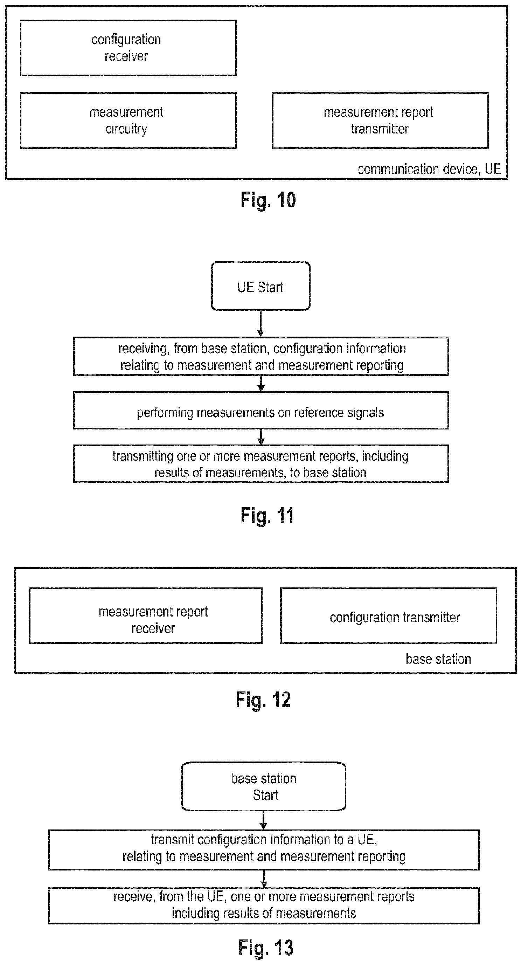

**Fig. 10** illustrates a simplified and exemplary UE structure according to a basic implementation underlying the four solutions presented below. In one example, the UE structure can be implemented based on the general UE structure explained in connection with Fig. 9. The various structural elements of the UE illustrated in said Fig. 10 can be interconnected between one another e.g., with corresponding input/output nodes (not shown) e.g., in order to exchange control and user data and other signals. Although not shown for illustration purposes, the UE may include further structural elements.

As apparent from Fig. 10, the UE may include a configuration receiver, a measurement circuitry, and a measurement report transmitter.

In the present case as will become apparent from the below disclosure, the receiver of the UE can thus be exemplarily configured to at least partly perform one or more of receiving configuration information about a plurality of candidate resource configurations for the reference signal, of receiving a reference signal configuration indication, of receiving reporting configuration including a plurality of sub-configurations, of receiving a reporting indication, etc.

In the present case as will become apparent from the below disclosure, the processing circuitry of the UE can thus be exemplarily configured to at least partly perform one or more of measuring a reference signal, generating a measurement report, determining a priority of measurement results, determining whether or not to transmit a measurement result based on a dropping rule, etc.

In the present case as will become apparent from the below disclosure, the transmitter of the UE can thus be exemplarily configured to at least partly perform one or more of transmitting a measurement report, of transmitting a UE capability indication, etc.

One exemplary and basic procedure involves that the UE receives, from the base station, configuration information relating to the improved measurement and reporting procedure according to any one of the four solutions. The UE accordingly performs measurements on the reference signals according to any one of the four solutions. The UE then transmits one or more measurement reports to the base station, including the results of the performed measurements according to any one of the four solutions. A corresponding sequence diagram for an exemplary UE behaviour in line with the above-discussed UE and UE method is illustrated in **Fig. 11****.**

Some exemplary implementations of the four solutions also involve improved base stations. Correspondingly, the solutions also provide improved base stations that participate therein, as will be explained in the following.

**Fig. 12** illustrates a simplified and exemplary base station structure according to a basic implementation underlying the four solutions presented below. In one example, the base station structure can be implemented based on the general base station structure explained in connection with Fig. 9. The various structural elements of the base station illustrated in said Fig. 12 can be interconnected between one another e.g., with corresponding input/output nodes (not shown) e.g., in order to exchange control and user data and other signals. Although not shown for illustration purposes, the base station may include further structural elements.

As apparent therefrom, the base station comprises a measurement report receiver and a configuration transmitter.

In the present case as will become apparent from the below disclosure, the receiver of the base station can thus be exemplarily configured to at least partly perform one or more of receiving a measurement report and receiving a UE capability indication, etc.

In the present case as will become apparent from the below disclosure, the processing circuitry of the base station can thus be exemplarily configured to at least partly perform one or more of generating a configuration for a UE, etc.

In the present case as will become apparent from the below disclosure, the transmitter of the base station can thus be exemplarily configured to at least partly perform one or more of transmitting information on a configuration about a plurality of candidate resource configurations for the reference signal, of transmitting a reference signal configuration indication, of transmitting reporting configuration information including a plurality of sub-configurations, of transmitting a reporting indication, etc.

One exemplary and basic procedure involves that the base station transmits, to a UE, configuration information relating to the improved measurement and reporting procedure according to any one of the four solutions. The base station can then receive, from the UE, one or more measurement reports, including the results of the measurements performed by the UE. A corresponding sequence diagram for an exemplary behaviour in line with the above-discussed base station and base station method is illustrated in **Fig. 13****.**

The following solutions can for instance be based on the UE, UE method, base station and base station method discussed above in connection with Fig. 10, 11, 12, and 13.

### First solution - Candidate resource configurations of reference signal

In brief, the First Solution is directed to first providing several candidate resource configurations of a reference signal that can be transmitted by a base station, wherein the base station then instructs the UE to follow one or more among the several candidate resource configurations that were previously configured.

One exemplary procedure according to the First solution as will be disclosed in more detail further below is implemented by a UE that includes the following. A receiver of the UE receives, from a base station, a reference signal configuration about a plurality of candidate resource configurations of a reference signal that can be transmitted by the base station to the UE. The receiver receives, from the base station, a reference signal configuration indication, indicating one or more of the configured plurality of candidate resource configurations. A processor of the UE measures the reference signal received from the base station based on the indicated candidate resource configurations. The processor generates one or more measurement reports including measurement results for the measured reference signal. A transmitter of the UE transmits, to the base station, the generated measurement reports.

A corresponding exemplary method according to the First solution comprises the following steps performed by a UE:
receiving, from a base station, a reference signal configuration about a plurality of candidate resource configurations of a reference signal that can be transmitted by the base station to the UE,
receiving, from the base station, a reference signal configuration indication, indicating one or more of the configured plurality of candidate resource configurations,
measuring the reference signal received from the base station based on the indicated candidate resource configurations,
generating one or more measurement reports including measurement results for the measured reference signal, and
transmitting, to the base station, the generated measurement reports.

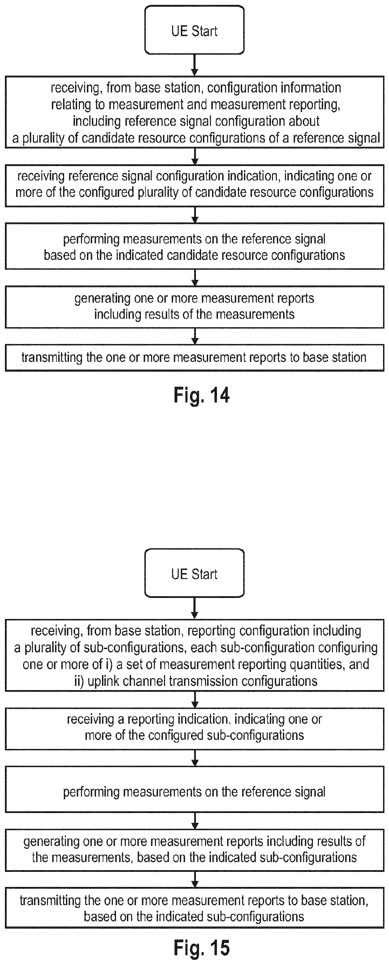

A corresponding sequence diagram for an exemplary UE behaviour in line with the above-discussed UE and UE method according to the First solution is illustrated in **Fig. 14****.**

The First Solution also provides an improved base station, which may include the following. A processor of the base station generates a reference signal configuration having a plurality of candidate resource configurations of a reference signal that can be transmitted by the base station to a user equipment, UE. A transmitter of the base station transmits the generated reference signal configuration to the UE. The processor determines one or more of the configured plurality of candidate resource configurations for use by the UE. The transmitter transmits a reference signal configuration indication to the UE, indicating the determined one or more candidate resource configurations. The transmitter further transmits the reference signal to the UE. A receiver of the base station receives one or more measurement reports from the UE, including measurement results for the reference signal, measured by the UE based on the indicated one or more candidate resource configurations.

According to the First Solution, it is thus possible to configure a flexible number of candidate resource configurations for the reference signal, while at the same time facilitating selecting one or more of them for the UE to actually perform the measurements and reporting. Furthermore, by enabling the gNB to flexibly select among the previously-configured configurations, it is possible to achieve a suitable tradeoff between a network energy saving gain, UE processing complexity and system overhead.

The base station can efficiently determine how to adapt spatial elements (such as the antenna ports and active transceiver chains), based on information obtained from the various measurement reports and the configured candidate transmission characteristics for the reference signal. For instance, network energy saving can be achieved if possible by reducing the power consumption of the transmission chains and the power amplifiers, and by using less antenna ports (e.g. for the transmission of the reference signal).

According to one variant of the First solution, which can be combined with any of the other variants described herein, at least two of the plurality of candidate resource configurations differ from one another by defining a candidate transmission characteristic for the reference signal that has a different value. For instance, the different candidate transmission characteristics are one or more of
- different antenna port patterns for the reference signal,
- different transmission powers for the reference signal, and
- different transmission powers for a downlink data channel for which the reference signal is measured.

Generally, it may be for instance that the plurality of candidate resource configurations includes at least one that defines at least one transmission characteristic that is different than actually used by the base station to transmit the reference signal to the UE, as will become apparent from below.

In more detail, the different antenna port patterns for the reference signal can be implemented in different ways. For instance, one candidate antenna port pattern can be the antenna port pattern actually used by the base station to transmit the reference signal, while another candidate antenna port pattern can be a sub-set of this actually-used antenna port pattern. When exemplarily assuming that the reference signal is transmitted using 16 antenna ports, one candidate antenna port pattern could be the 16 antenna port pattern actually used by the base station to transmit the reference signal to the UE, while other candidate antenna port patterns could be a subset of 8 out of the 16 antenna ports or 4 out of the 16 antenna ports, etc. Correspondingly, when exemplarily assuming that the reference signal is transmitted using 8 antenna ports, one candidate antenna port pattern could be the 8 antenna port pattern actually used by the base station to transmit the reference signal to the UE, while other candidate antenna port patterns could be a subset of 4 out of the 8 antenna ports or 2 out of the 8 antenna ports, etc.

Then, when selected by the base station and instructed to the UE using the corresponding reference signal configuration indication, the indicated antenna port pattern(s) is utilized by the UE to generate the measurement results.

Different implementations are possible on how to indicate the different antenna port patterns for the reference signal.

One possible implementation is to use a code division multiplex, CDM, group index to identify the antenna port pattern. In more detail, reference signal transmissions using multiple antenna ports can be implemented - at least partly - by using code domain multiplexing, i.e. using different orthogonal patterns. Correspondingly, it is possible to group antenna ports in the CDM domain and then to identify the different CDM groups by using suitable indices. For instance, when indicating 2 antenna ports among 8 antenna ports, the CDM group {0}, {1}, {2} or {3} could be indicated. As another example, when indicating 4 antenna ports among 8 antenna ports, the CDM groups {0, 1} or {2, 3} or another combination could be indicated. One exemplary 5G-compliant implementation may follow the CDM group indexing already established for the CSI-RS (see e.g. TS 38.211 section 7.4.1.5.3; CDM group index j).

This first possible implementation is advantageous in that it may be implemented by reusing known mechanisms from 5G NR, thus resulting in less standard specification impact. Further, the antenna port pattern can be indicated with only little control overhead.

Another possible implementation is to use indices of antenna ports to identify the antenna port pattern. Correspondingly, one or more antenna port indices could be indicated directly, such as antenna ports {0}, {1}, {2}, {3}, {0, 1}, {0, 3}, {2, 3}, {0, 1, 2, 3} or other combinations. This possible implementation offers a large flexibility of how antenna port patterns can be indicated.

Still another possible implementation is to use a combination of a CDM group index and an antenna port index (see above implementations) to identify the candidate antenna port pattern. Correspondingly, an antenna port pattern can be indicated with antenna port indices across different CDM groups. For instance, when indicating 2 antenna ports, the first antenna port respectively in the CDM group 0 and 1, or 0 and 2, or other combinations can be indicated. As another example, when indicating 4 antenna ports, the first antenna port or the second antenna port respectively in the CDM groups 0, 1, 2, 3 can be indicated. This possible implementation represents a tradeoff between the above two implementations. Furthermore, it may potentially cause less interference within each subset caused by the CDMed superposition.

Moreover, with regard to the different transmission powers for the reference signal, one possible implementation is to indicate a power offset with respect to a synchronization signal block transmission from the base station.

Still further, with regard to the different transmission powers for a downlink data channel for which the reference signal is measured, one possible implementation is to indicate a power offset with respect to the reference signal (i.e. between the reference signal and the downlink data channel). In one example, the downlink data channel can be the Physical Downlink Shared CHannel, PDSCH, known in 5G NR. Further, the transmission power for the downlink data channel (indicated in turn e.g. by a power offset) can be the same as or higher or lower than the actual transmission power used by the base station to transmit the downlink data channel.

The base station can efficiently determine how to adapt the power offset values with respect to the downlink data channel (e.g. PDSCH) and the reference signal (e.g. CSI-RS), based on information obtained from the various measurement reports and the configured candidate transmission characteristics for the reference signal.

In a further variant of the First solution, which can be combined with any of the other variants described herein, the plurality of candidate resource configurations may further define the radio resource elements in the frequency domain and time domain that carry the reference signal. Thus, for instance, one candidate resource configuration may define the radio resource elements in the frequency and time domain for the reference signal, an antenna port pattern for the reference signal, and one or both transmission powers for the reference signal respectively the downlink data channel.

One exemplary structure of how to configure the various candidate resource configurations of the reference signal is presented in the following:
i. Resource #1 (two or more candidates)
   a. Candidate antenna pattern #1
   b. Candidate antenna pattern #2
   c..
ii. Resource #2 (one candidate)
   a. Candidate antenna pattern #3
iii..
iv. Resource #N
   a. Candidate antenna pattern #M

As apparent from the above, the reference signal configuration information configures resources for one or more reference signal. Each radio resource is associated / configured with one or more different candidate transmission characteristic (in the above, e.g. the candidate antenna patterns) for the reference signal, as presented above.

Another exemplary structure of how to configure the various candidate resource configurations of the reference signal is presented in the following:
i. Resource Set #1:
   a. Resource #1 (two or more candidates)
      i. Candidate antenna pattern #1 (e.g. 4 port)
      ii. Candidate antenna pattern #2 (e.g. 8 port)
      iii..
   b. Resource #2 (one candidate)
      i. Candidate antenna pattern #3 (e.g. 8 port)
   c..
   d. Resource #N
      i. Candidate antenna pattern #M (e.g. 8 port)
ii. Resource set #2
   a....
iii..
iv. Resource set #K
   a....

As apparent from the above, and in addition to the previous exemplary structure, the reference signal configuration information configures one or more radio resource sets for the reference signal. Each radio resource set indicates one or more reference signals with radio resource configuration, e.g. as presented in the previous exemplary structure. Correspondingly, this exemplary structure implements a further top level, the reference resource set.

Put differently, one reference signal configuration may contain one or multiple reference signal resource sets for the UE. Each of these resource sets may contain one or multiple reference signal resources, each of which in turn may contain one or multiple candidate transmission characteristics.

Although not illustrated in the above configured structures, according to a further exemplary variant, each candidate antenna pattern can be additionally configured with an associated transmission power for the reference signal or with an associated transmission power for the downlink data channel or with both.

According to the First Solution, the base station, after having pre-configured the candidate resource configurations, then selects which of the candidate resource configurations should be used by the UE for the reference signal measurement and measurement result reporting. Correspondingly, the reference signal configuration indication is transmitted by the base station to the UE, indicating one or more of the previously configured candidate resource configurations for processing.

According to further variants of the First solution, which can be combined with any of the other variants described herein, there are several ways on how to implement the reference signal configuration indication.

In one possible implementation, the reference signal configuration indication indicates the one or more candidate resource configurations based on a group ID. In particular, each of the plurality of candidate resource configurations is associated with one among a plurality of group IDs, such that there is an unambiguous one-to-one relationship between a group ID and one or more candidate resource configurations. Further, it is exemplary assumed that one candidate resource configuration can only belong to one group.

Alternatively, the group IDs are associated respectively with one or more of the candidate transmission characteristics. Correspondingly, when a candidate transmission characteristic is indicated by the group ID, the UE can determine the corresponding candidate resource configurations that contain said indicated candidate transmission characteristic.

The association between the group IDs and the candidate resource configurations, respectively the candidate transmission characteristics, can be configured in advance between the base station and the UE, e.g. using RRC messages.

In another possible implementation, the reference signal configuration indication indicates the one or more candidate resource configurations based on a bitmap. Each bit of the bitmap can be associated with one or more of the plurality of candidate resource configurations. Correspondingly, by setting the bit to a particular value (such as 1), the bit of the bitmap indicates that the measurement of the reference signal shall be based on the associated one or more candidate resource configurations.

Alternatively, the bits of the bitmap may be associated respectively with one or more of the candidate transmission characteristics. Correspondingly, when a candidate transmission characteristic is indicated by a bit, the UE can determine the corresponding candidate resource configurations that contain said indicated candidate transmission characteristic.

The association between the bits of the bitmap and the candidate resource configurations, respectively the candidate transmission characteristics, can be configured in advance between the base station and the UE, e.g. using RRC messages.

In a still further implementation, the reference signal configuration indication indicates the one or more candidate resource configurations based on a codeword. In particular, each codeword can be associated with one or more of the plurality of candidate resource configurations. In one example, one candidate resource configuration can be associated with more than one codeword, such that the codeword-based implementation is flexible in defining different combinations of candidate resource configurations to be indicated by the base station.

Alternatively, the codewords may be associated respectively with one or more of the candidate transmission characteristics. Correspondingly, when a candidate transmission characteristic is indicated by a codeword, the UE can determine the corresponding candidate resource configurations that contain said indicated candidate transmission characteristic.

The association between the codewords and the candidate resource configurations, respectively the candidate transmission characteristics, can be configured in advance between the base station and the UE, e.g. using RRC messages.

According to a 5G-compliant exemplary implementation, the First Solution reuses at least part of the configuration structure for measurement and measurement reporting already defined in the 3GPP standards, e.g. as explained above. According to one exemplary assumption, the above-noted reference signal can be the CSI-RS, Channel State Information Reference Signal. Furthermore, the configuration of the CSI-RS could then be implemented the same or similar to the *CSI-ResourceConfig* described above with respect to TS38.331.

### Second solution - reporting sub-configurations

In brief, the Second Solution is directed to first providing reporting configurations with several sub-configurations regarding how the reporting of measurement results can be configured. Then, the base station may instruct the UE to follow one or more of the sub-configurations among all that were previously configured.

The Second solution can be used in combination with the First solution or standalone.

One exemplary procedure according to the Second solution as will be disclosed in more detail further below is implemented by a UE that includes the following. A receiver of the UE receives, from the base station, a reporting configuration, including a plurality of sub-configurations. Each of the sub-configurations configures one or more of:
- a set of measurement reporting quantities, such as one or more of a channel quality parameter, a channel quality indicator, a precoding matrix indicator, a reference signal indicator, a layer indicator, a rank indicator,
- an uplink channel transmission configuration, configuring one or more of time and frequency of radio resources for an uplink channel, usable for transmitting the measurement results for the respective sub-configuration.

The receiver further receives a reporting indication, indicating one or more of the sub-configurations. The processor of the UE generates a measurement report and the transmitter transmits the measurement report to the base station based on the indicated one or more sub-configurations.

A corresponding exemplary method according to the Second solution comprises the following steps performed by a UE:
receiving, from the base station, a reporting configuration, including a plurality of sub-configurations each of which configures one or more of:
   - a set of measurement reporting quantities, such as one or more of a channel quality parameter, a channel quality indicator, a precoding matrix indicator, a reference signal indicator, a layer indicator, a rank indicator,
   - an uplink channel transmission configuration, configuring one or more of time and frequency of radio resources for an uplink channel, usable for transmitting the measurement results for the respective sub-configuration,
receiving a reporting indication, indicating one or more of the sub-configurations,
generating a measurement report and transmitting the measurement report to the base station based on the indicated one or more sub-configurations.

A corresponding sequence diagram for an exemplary UE behaviour in line with the above-discussed UE and UE method according to the Second solution is illustrated in **Fig. 15****.** As apparent from Fig. 15, the UE behaviour follows conceptually the UE and UE method from above. Fig. 15 further illustrates that the UE performs the measurements on the reference signal, based on which the UE then generates the one or more measurement reports to be transmitted to the base station.

Depending on the content of the sub-configuration, the UE may have to take the sub-configuration already into account when generating the measurement report, e.g. so as to include those reporting quantities indicated by the sub-configuration. The UE may have to take the sub-configuration also into account in the process of transmitting the measurement report(s) to the base station, e.g. so as to use the configuration of the uplink channel as indicated by the sub-configuration.

The Second Solution also provides an improved base station, which may include the following.

A processor of the base station may generate a reporting configuration, including a plurality of sub-configurations each of which configures one or more of:
- a set of measurement reporting quantities, such as one or more of a channel quality parameter, a channel quality indicator, a precoding matrix indicator, a reference signal indicator, a layer indicator, a rank indicator,
- an uplink channel transmission configuration, configuring one or more of time and frequency of radio resources for an uplink channel, usable for transmitting the measurement results for the respective sub-configuration.

A transmitter of the base station then transmits the reporting configuration to the UE. The processor then determines one or more among the plurality of sub-configurations for use by the UE. The transmitter transmits a reporting indication to the UE, indicating the determined one or more sub-configurations. A receiver of the base station receives one or more measurement reports from the UE, including measurement results for the reference signal. The measurement results and measurement report were generated and transmitted by the UE based one the indicated sub-configurations.

According to the Second Solution, the different sub-configurations of the reporting configuration can thus define one or more different sets of measurement reporting quantities and uplink channel transmission configurations. The different sub-configurations thus allow to configure in advance different ways on which measurement results are to be reported to the base station (see reporting quantities) and how the measurement results are to be reported to the base station (see uplink channel transmission configuration).

The Second solution may thus facilitate providing more flexibility by configuring the same or different parameters for different sub-configurations. The base station can flexibly control details of the measurement reporting performed by the UE, thus controlling the UE processing, UE occupancy and uplink control overhead resulting from the measurement and measurement reporting.

According to one example implementation, the uplink channel transmission configuration may configure one or more of a time and/or frequency resources for the uplink channel (e.g. the PUCCH or PUSCH) usable for transmitting measurement results for the respective sub-configuration. In one option, different sub-configurations can differ as regards the parameters for the uplink channel transmission configuration, more specifically defining different time or frequency radio resources. This facilitates that the base station has the possibility to configure and select the most suitable uplink channel in one or more time/frequency resources to report the measurement results for sub-configuration(s) among the previously-configured sub-configurations.

According to one example implementation, the set of measurement reporting quantities may comprise one or more of a channel quality parameter, a channel quality indicator, a precoding matrix indicator, a reference signal indicator, a layer indicator and a rank indicator, and possibly others. In a 5G-compliant exemplary implementation, the reporting quantities could be the L1-RSRP/SINR, CRI (CSI-RS Resource indicator), the CQI, PMI, Rl, LI (Layer indicator, which is the strongest layer represented by the column of the precoder matrix of the reported PMI corresponding to the largest reported wideband CQI).

Any suitable combination of the reporting quantities can be configured in a sub-configuration. In one option, different sub-configurations can differ as regards the reporting quantities, more specifically differing as regards the overall number of reporting quantities and/or which reporting quantities are configured by a sub-configuration. This facilitates that the base station has the possibility to select the most suitable sub-configuration(s) among the previously-configured sub-configurations.

As discussed above, the reporting configuration as a whole can thus include the configuration of the reporting quantities and the configuration of the uplink channel, e.g. as part of the sub-configuration. According to one variant of the Second Solution, the reporting configuration may further include the configuration of the reference signal. In one example implementation, said reference signal configuration, as part of the reporting configuration, can be implemented according to the above discussed First Solution, i.e. when combining the Second and First solutions, the reporting configuration may include a reference signal configuration with several candidate resource configurations of a reference signal.

Alternatively, if the reporting configuration, particularly the sub-configuration, does not include the configuration of the reference signal, the reference signal configuration can be configured separately for one or more of the sub-configurations of a reporting configuration, e.g. based on a MAC Control Element or a DCI. In any case, the UE has access to the necessary configuration information regarding the reference signal, the reporting quantities and the uplink channel for each reporting configuration, respectively for each sub-configuration.

Some variants of the Second solution, which can be combined with other variants, relate to how the structure of the reporting configurations and sub-configurations can be defined. For sake of explanation, it is exemplary assumed that a reporting configuration includes the configuration of the reporting quantities, the configuration of the uplink channel, as well as the configuration of the reference signal (see above discussion).

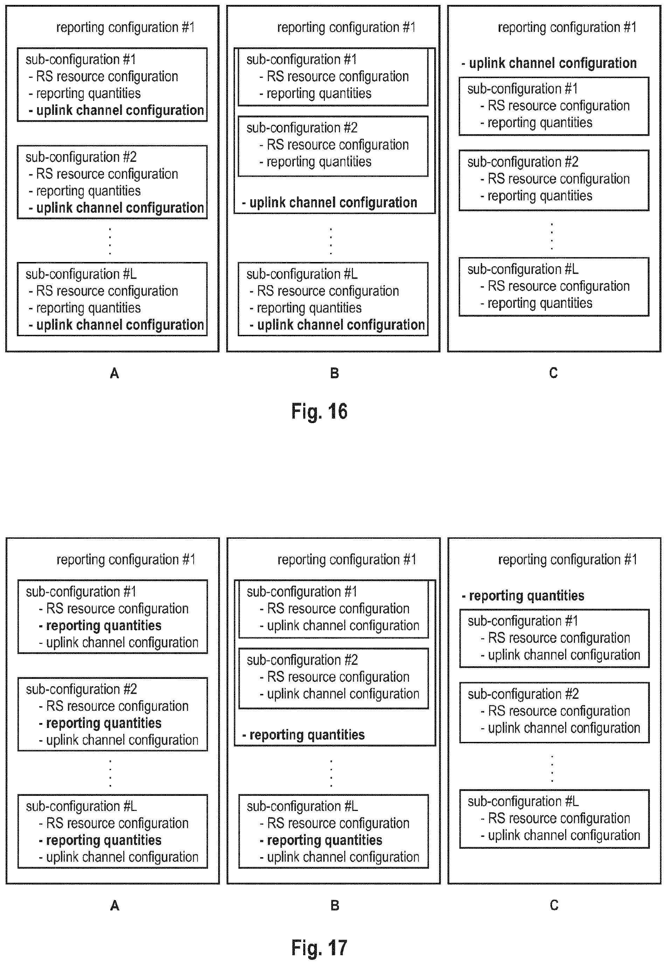

In one implementation, the uplink channel transmission configuration can be configured per sub-configuration, or shared for at least two sub-configurations or shared for all sub-configurations. **Fig. 16** illustrates the above-noted different possibilities. In part A of Fig. 16, each sub-configuration comprises its own uplink channel configuration. This allows the maximum flexibility for the configuration of the uplink channel among the sub-configurations, because for each sub-configuration a different uplink channel configuration could be defined (although it is not mandatory). This allows the base station to control said aspect of the measurement reporting by the UE.

In part C of Fig. 16, there is only one uplink channel configuration in the reporting configuration that is shared by all sub-configurations of that reporting configuration. Although this implementation restricts the flexibility, it reduces the control overhead (e.g. in RRC) for configuring the reporting configuration and might also result in having less impact for the standard specification.

In part B of Fig. 16, two sub-configurations share the same uplink channel configuration, while another sub-configuration comprises its own uplink channel configuration. This implementation represents a tradeoff between the two implementations of parts A and C of Fig. 16.

A UE may be capable of supporting the three different possible structures of the reporting configuration and the sub-configurations, according to parts A-C of Fig. 16. The base station may decide on how to best structure the reporting configurations, which thus in turn increases the flexibility of the configuration possibilities at the base station side.

Moreover, in a corresponding manner as discussed above for the uplink channel configuration, the set of reporting quantities can be configured per sub-configuration, or shared for at least two sub-configurations or shared for all sub-configurations. **Fig. 17** illustrates the above-noted different possibilities. In part A of Fig. 17, each sub-configuration comprises its own set of reporting quantities. This allows the maximum flexibility for the configuration of reporting quantities among the sub-configurations, because for each sub-configuration a different set of reporting quantities could be defined (although it is not mandatory).

In part C of Fig. 17, there is only one set of reporting quantities in the reporting configuration that is shared by all sub-configurations of that reporting configuration. Although this implementation restricts the flexibility, it reduces the control overhead (e.g. in RRC) for configuring the reporting configuration and might also result in having less impact for the standard specification.

In part B of Fig. 17, two sub-configurations share the same set of reporting quantities, while another sub-configuration comprises its own set of reporting quantities. This implementation represents a tradeoff between the two implementations of parts A and C of Fig. 17.

A UE may be capable of supporting the three different possible structures of the reporting configuration and the sub-configurations, according to parts A-C of Fig. 17. The base station may decide on how to best structure the reporting configurations, which thus in turn increases the flexibility of the configuration possibilities at the base station side.

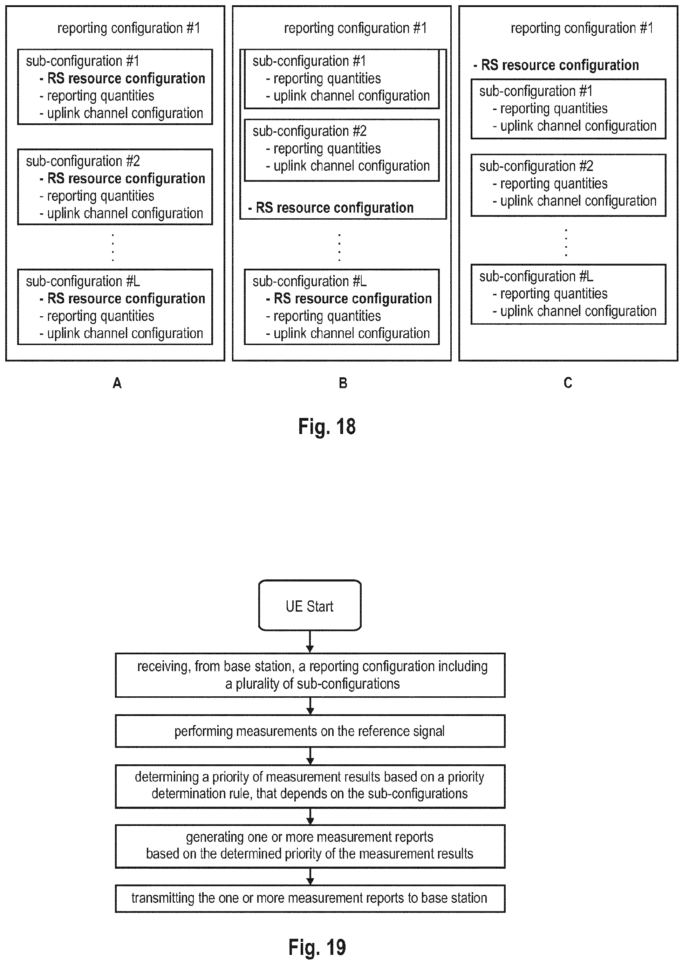

Moreover, in a corresponding manner as discussed above for the uplink channel configuration and set of reporting quantities, the reference signal can be configured per sub-configuration, or shared for at least two sub-configurations or shared for all sub-configurations. **Fig. 18** illustrates the above-noted different possibilities. In part A of Fig. 18, each sub-configuration comprises its own reference signal configuration. This allows the maximum flexibility for the configuration of the reference signal among the sub-configurations, because for each sub-configuration a different reference signal configuration could be defined (although it is not mandatory).

In part C of Fig. 18, there is only one configuration of the reference signal in the reporting configuration that is shared by all sub-configurations of that reporting configuration. Although this implementation restricts the flexibility, it reduces the control overhead (e.g. in RRC) for configuring the reporting configuration and might also result in having less impact for the standard specification.

In part B of Fig. 18, two sub-configurations share the same reference signal configuration, while another sub-configuration comprises its own configuration of the reference signal. This implementation represents a tradeoff between the two implementations of parts A and C of Fig. 18.

A UE may be capable of supporting the three different possible structures of the reporting configuration and the sub-configurations, according to parts A-C of Fig. 17. The base station may decide on how to best structure the reporting configurations, which thus in turn increases the flexibility of the configuration possibilities at the base station side.

According to the Second Solution, the base station, after having pre-configured the reporting configuration and sub-configurations, then selects which of the sub-configurations (and thus which reporting configurations) should be used by the UE for the reference signal measurement and measurement result reporting. Correspondingly, the reporting indication is transmitted by the base station to the UE, indicating the selected one or more sub-configurations.

According to further variants of the Second solution, which can be combined with any of the other variants described herein, there are several ways on how to implement the reporting indication.

In one possible implementation, the reporting indication indicates the one or more sub-configurations based on a group ID. In particular, each of the plurality of sub-configurations is associated with one among a plurality of group IDs, such that there is an unambiguous one-to-one relationship between a group ID and one or more sub-configurations. Further, it is exemplary assumed that one sub-configuration can only belong to one group.

The association between the group IDs and the sub-configurations can be configured in advance between the base station and the UE, e.g. using RRC messages.

In another possible implementation, the reporting indication indicates the one or more sub-configurations based on a bitmap. Each bit of the bitmap can be associated with one or more of the plurality of sub-configurations. Correspondingly, by setting the bit to a particular value (such as 1), the bit of the bitmap indicates that the measurement reporting signal shall be based on the associated one or more sub-configurations.

The association between the bits of the bitmap and the sub-configurations can be configured in advance between the base station and the UE, e.g. using RRC messages.

In a still further implementation, the reporting indication indicates the one or more sub-configurations based on a codeword. In particular, each codeword can be associated with one or more of the plurality of sub-configurations. In one example, one sub-configuration can be associated with more than one codeword, such that the codeword-based implementation is flexible in defining different combinations of sub-configurations to be indicated by the base station.

The association between the codewords and the sub-configurations can be configured in advance between the base station and the UE, e.g. using RRC messages.

A further implementation on how to indicate sub-configurations is based on indicating the first or last N sub-configurations among all of the pre-configured sub-configurations. In more detail, it can exemplarily be assumed that the sub-configurations are configured by the base station such that the relevance and importance of the configured sub-configurations for the base station increases with the order. Correspondingly, the base station simply indicates a number N, and the UE performs the measurement and reporting based on a number N of sub-configurations in the order, as indicated. Such an implementation facilitates reducing the necessary bits for the reporting indication.

In further exemplary implementations, the reporting indication is received by the UE as a Radio Resource Control, RRC, message or a Medium Access Control, MAC, Control Element or a downlink control information, DCI, message. For instance, when using a MAC CE or DCI message, the measurement processing and reporting can be quickly and easily adapted by the base station to its needs.

Furthermore, in an exemplary implementation, the reporting configuration, with the plurality of sub-configurations, is received by the UE as a Radio Resource Control, RRC, message.

In the above, it was described how the UE is configured to perform the measurement and the measurement reporting, taking into account the indicated sub-configurations. The Second solution and its various variants and implementations can be applied to scenarios where the generating and transmitting of the measurement reports is performed by the UE periodically, semi-persistently or aperiodically.

According to a 5G-compliant exemplary implementation, the Second Solution reuses at least part of the configuration structure for measurement and measurement reporting already defined in the 3GPP standards, e.g. as explained above. According to one exemplary assumption, the above-noted reference signal can be the CSI-RS, Channel State Information Reference Signal. Furthermore, the reporting configuration could be implemented the same or similar to the RRC Information Element *CSI-ReportConfig* described above with respect to TS 38.331.

### Third solution - CSI priority determination rules

In brief, the Third Solution is directed to defining an improved priority determination rule for prioritizing measurement results, for scenarios in which the measurement results are generated based on sub-configurations within a reporting configuration (e.g. the sub-configurations of the Second Solution).

Correspondingly, it is exemplarily assumed that a reporting configuration is structured to have a plurality of sub-configurations. In one example, the Third Solution can be used in combination with the Second solution providing an improved measurement and reporting procedure as regards how the reporting of measurement results can be configured using sub-configurations within a reporting configuration. Furthermore, as presented above, the Second Solution may be combined with the First solution, such that a combination of the First, the Second and the Third solutions is possible too.

On the other hand, the Third Solution can also be standalone, i.e. not in combination with any of the First and Second solutions.

One exemplary procedure according to the Third solution as will be disclosed in more detail further below is implemented by a UE that includes the following. A processor of the UE determines a priority of the measurement results to be transmitted to the base station. The priority of the measurement results depends on a priority determination rule which is based on one or more of the following:
- a measurement result determined based on a reporting configuration with multiple sub-configurations has a higher or lower priority than a measurement result determined based on a reporting configuration without multiple sub-configurations,
- the number of sub-configurations of a reporting configuration, optionally wherein the higher the number of sub-configurations of a reporting configuration, the higher or the lower the priority of the measurement result determined based on said reporting configuration, and
- the lower an index associated with a sub-configuration of a reporting configuration, the higher or lower the priority of the measurement result determined based on said sub-configuration.

A corresponding exemplary method according to the Third solution comprises the following steps performed by a UE:
determining a priority of the measurement results to be transmitted to the base station, wherein the priority of the measurement results depends on a priority determination rule which is based on one or more of the following:
- a measurement result determined based on a reporting configuration with multiple sub-configurations has a higher or lower priority than a measurement result determined based on a reporting configuration without multiple sub-configurations,
- the number of sub-configurations of a reporting configuration, optionally wherein the higher the number of sub-configurations of a reporting configuration, the higher or the lower the priority of the measurement result determined based on said reporting configuration, and
- the lower an index associated with a sub-configuration of a reporting configuration, the higher or lower the priority of the measurement result determined based on said sub-configuration.

A corresponding sequence diagram for an exemplary UE behaviour in line with the above-discussed UE and UE method according to the Third solution is illustrated in **Fig. 19****.** As further apparent from Fig. 19, although the Third solution focuses on how measurement results are prioritized, there may be other aspects to the Third solution. For instance, the UE may receive necessary configuration information for being able to perform the measurement and measurement reporting. This might involve that the UE receives from the base station a reporting configuration with a plurality of sub-configurations within. Correspondingly, the UE performs measurements on the reference signal, in accordance with the received configuration(s). The thus achieved measurement results can then be subject to the improved priority determination of the Third solution - if necessary, which takes into account the presence of sub-configurations as presented above and explained in detail below. Further, the thus-determined priorities of the measurement results can then be used subsequently, e.g. when generating one or more measurement reports with the measurement results. Finally, the thus generated measurement reports are transmitted by the UE to the base station.

The Third Solution also provides an improved base station, which may include the following.

A processor of the base station generates a reporting configuration, including a plurality of sub-configurations. A transmitter of the base station then transmits the generated reporting configuration to the UE. A receiver of the base station receives one or more measurement reports from the UE, which are generated by the UE based on applying a priority determination rule. In one example, the priority determination rule can be defined and controlled by the base station so to be based on one or more of the following:
- a measurement result determined based on a reporting configuration with multiple sub-configurations has a higher or lower priority than a measurement result determined based on a reporting configuration without multiple sub-configurations,
- the number of sub-configurations of a reporting configuration, optionally wherein the higher the number of sub-configurations of a reporting configuration, the higher or the lower the priority of the measurement result determined based on said reporting configuration, and
- the lower an index associated with a sub-configuration of a reporting configuration, the higher or lower the priority of the measurement result determined based on said sub-configuration.

The Third Solution thus allows to adapt the existing priority determination also to those scenarios in which reporting configurations include a multitude of sub-configurations. In more detail, 5G NR already provides mechanisms for processing CSI reports, wherein the mechanisms may use a priority of the CSI reports (and the measurement results contained therein).

For instance, TS 38.214 in clause 5.2.5 provides priority rules that can be applied for two overlapping PUSCHs, and for instance deals with the situation where two CSI reports collide (if the time occupancy of the physical channels scheduled to carry the two CSI reports overlap in at least one OFDM symbol and are transmitted on the same carrier). For such colliding CSI reports, 5G NR provides the possibility that the CSI report with the higher priority value shall not be sent by the UE.

Furthermore, clause 9.2.5.2 of TS 38.213 also defines a mechanism of selecting CSI reports that is based on priority values of the CSI reports. Non-selected CSI reports may need to be dropped by the UE and thus are not transmitted to the base station.

Still further, the transmission of uplink control information (such as the CSI reports, HARQ ACK/NACK, Scheduling Requests) involves the UCI bit sequence generation, which can also be based on a priority, according to clause 6.3.1.1 of TS 38.212.

In summary, the priority of channel state measurements are used in various mechanisms at the UE. More generally, the relevant mechanisms may include e.g.
- a bit sequence generation of uplink control information, carrying the measurement results, wherein the priority of the measurement results is taken into account for determining an order of bits generated by the bit sequence generation, and
- the dropping of measurement results, which involves dropping measurement results depending on their priority, e.g. in an ascending order of priority.

Consequently, when implementing the new feature of sub-configurations as part of the reporting configurations, the inventors have identified the possibility to adapt such existing mechanisms to this new feature. In particular, the Third solution provides an improved priority determination rule that takes into account the sub-configurations.

It is exemplarily assumed that the UE is configured by the base station for measurement and reporting, which also involves that the UE is configured with a reporting configuration including on a plurality of sub-configurations. Correspondingly, the UE performs the measurements on the reference signal and thus generates the measurement results. At this point, the UE may determine a priority of the measurement results to be transmitted to the base station, based on an improved priority determination concept.

This improved priority determination takes into account the sub-configurations and may follow one or more of the rules discussed in the following.

According to one rule, a measurement result that is determined based on a reporting configuration with multiple sub-configurations has a higher or lower priority than a measurement result determined based on a reporting configuration without multiple sub-configurations. This new rule is thus advantageous as it allows the UE to compare measurement results that are generated based on the new sub-configuration feature with the legacy configuration structure without sub-configurations.

According to another rule, the number of sub-configurations of a reporting configuration has an influence on the priority of the thus-generated measurement result. In one example, the higher the number of sub-configurations of a reporting configuration, the higher or the lower the priority of the measurement result determined based on said reporting configuration. This new rule is thus advantageous as it allows the UE to prioritize reporting configurations with the new sub-configuration structure among themselves.

According to still another rule, the lower an index associated with a sub-configuration of a reporting configuration, the higher or lower the priority of the measurement result determined based on said sub-configuration. Put differently, the sub-configurations are ordered within the reporting configuration in an ascending or descending order of priority. This new rule is thus advantageous in that it allows the UE to apply a prioritization within one reporting configuration.

As presented above, the new rules allow a very flexible prioritization from the base station side, e.g. allowing the base station to define higher or lower priorities according to its needs. For instance, the base station may assign a higher priority to a reporting configuration that has a lot of sub-configurations (compared to a reporting configuration with only a few sub-configurations), because the base station is interested in obtaining as much information as possible. On the other hand, the base station may assign a lower priority to a reporting configuration that has a lot of sub-configurations (compared to a reporting configuration with only a few sub-configurations), because the base station is interested in reducing the uplink control overhead.

Similarly, the base station may assign a higher priority to a reporting configuration without sub-configurations (compared to a reporting configuration with sub-configurations), because the base station considers the benefits provided by sub-configurations to be optional and thus wants to primarily support the legacy operation for measurement reporting. On the other hand, the base station may assign a lower priority to a reporting configuration without sub-configurations (compared to a reporting configuration with sub-configurations), because the base station is interested in obtaining as much information as possible so as to facilitate energy saving (at the UE and/or the base station) by adapting the measurement and reporting configuration based on the different measurement results obtained.

According to further variants of the Third solution, which can be combined with other variants, the above improved priority determination can also take into account the presence of particular measurement results as will be described in the following. In particular, the priority determination may be based on a further optional rule, according to which the higher the rank indicated by a rank indicator of a measurement result, the higher or lower the priority of the measurement result (or the whole measurement report including that rank indicator). In more detail, the rank indicator allows to obtain information about how well the antenna pattern used by the base station works, where a high rank indicator value indicates a good performance and a low rank indicator value indicates a bad performance.

According to a still further optional rule, the higher the channel quality indicated by a channel quality indicator of a measurement result, the higher or lower the priority of the measurement result (or the whole measurement report including that channel quality indicator).

Again, these rules, based on the rank indicator and the channel quality information, allow a very flexible prioritization from the base station side, e.g. allowing the base station to define higher or lower priorities according to its needs. For instance, learning about a low rank indicator value or a low channel quality information might be very useful for the base station, because it indicates the need to adapt transmission parameters at the base station side. Based on such an intention, a priority determination rule where a low rank indicator value or low channel quality information results in a high priority of the corresponding measurement result could be used.

On the other hand, learning about a high rank indicator value or high channel quality information is useful for the base station, because it indicates that a high throughput is possible such that base station can adapt the amount of data to be transmitted in the downlink. Based on such an intention, a priority determination rule where a high rank indicator value or high channel quality information results in a high priority of the corresponding measurement result could be used.

According to further variants of the Third solution, which can be combined with other variants, the above improved priority determination can be based on additional rules, such as any of existing prioritization rules. For instance, according to another rule, the lower an index associated with a reporting configuration (e.g. CSI-ReportConfig ID in 5G NR), the higher (alternatively lower) the priority of the measurement results determined based on said reporting configuration.

According to a 5G-compliant exemplary implementation, the Third Solution reuses at least part of the configuration structure for measurement and measurement reporting already defined in the 3GPP standards, e.g. as explained above. According to one exemplary assumption, the above-noted reference signal can be the CSI-RS, Channel State Information Reference Signal.

### Fourth solution - CSI dropping

In brief, the Fourth Solution is directed to defining an improved dropping rule for not transmitting measurement results, for scenarios in which the measurement results are generated based on different transmission characteristics of a reference signal(e.g. generated based on the candidate resource configurations of the reference signal of the First Solution) and/or for scenarios in which the measurement results are generated based on sub-configurations within a reporting configuration (e.g. the sub-configurations of the Second Solution).

Correspondingly, the Fourth Solution is primarily to be applied in such scenarios mentioned above. It is exemplarily assumed that the UE can be configured with a plurality of candidate resource configurations for configuring a reference signal (see also candidate transmission characteristics of the reference signal). In one example, the Fourth Solution can be used in combination with the First solution.

In addition or alternatively, it is exemplarily assumed that a reporting configuration is structured to have a plurality of sub-configurations. In one example, the Fourth Solution can be used in combination with the Second solution providing an improved measurement and reporting procedure as regards how the reporting of measurement results can be configured using sub-configurations within a reporting configuration.

Moreover, the improved dropping rule can be partly based on a priority of the measurements, such as the one defined according to the Third Solution.

On the other hand, the Fourth solution can also be standalone, i.e. not in combination with any of the First, Second or Third solutions.

For instance, the improved dropping procedure of the Fourth Solution can be applied for a measurement report with multiple measurement results that are generated from multiple candidate resource configurations of a reference signal or from multiple sub-configurations of a reporting configuration. Similarly, the improved dropping procedure of the Fourth Solution can be applied for multiple measurement reports (one or more of which have multiple measurement results that are generated from multiple candidate resource configurations of a reference signal or from multiple sub-configurations of a reporting configuration) that collide with each other (e.g. where collision may be understood in that the two colliding measurement reports collide in at least one OFDM symbol and would be transmitted on the same carrier).

One exemplary procedure according to the Fourth solution as will be disclosed in more detail further below is implemented by a UE that includes the following. It is assumed that a plurality of measurement results are to be transmitted to the base station. At least one of the measurement results is determined based on a reporting configuration with multiple sub-configurations or based on one of a plurality of candidate resource configurations of the reference signal.

The processor of the UE determines whether or not to not transmit one or more of the plurality of measurement results based on a dropping rule, wherein the dropping rule is based on one or more of the following:
- a measurement result with a low priority is dropped,
- a measurement result with a rank indicator indicating a rank higher or lower than a rank threshold is not dropped
- a measurement result with a channel quality indicator indicating a channel quality higher or lower than a channel quality threshold is not dropped,
- measurement results in descending order of priority are selected for transmission until an upper capacity limit of an uplink channel resource for carrying the measurement results is reached, wherein the remaining non-selected measurement results are dropped, optionally wherein the upper capacity limit is determined by the UE based on an amount of available resources in the uplink channel or based on an indication received from the base station via one or more of a Radio Resource Control, RRC, message, a Medium Access Control, MAC Control Element, or a downlink control information, DCI, message,
- measurement results in descending order of priority are selected for transmission until an upper processing limit of the UE for processing measurement results is reached, wherein the remaining non-selected measurement results are dropped, optionally wherein the upper processing limit is determined by the UE based on an indication received from the base station via one or more of a Radio Resource Control, RRC, message, a Medium Access Control, MAC Control Element, or a downlink control information, DCI, message, and
- a number N of measurement results among the plurality of measurement results, optionally wherein measurement results generated based on the first or last N sub-configurations are dropped, optionally wherein the first N measurement results with highest or lowest rank indicators are dropped, optionally wherein the first N measurement results with highest or lowest channel quality indicator are dropped, optionally wherein the UE determines the number N from a Medium Access Control, MAC Control Element, or a downlink control information, DCI, message.

A corresponding exemplary method according to the Fourth"solution comprises the following steps performed by a UE. It is assumed that a plurality of measurement results are to be transmitted to the base station. At least one of the measurement results is determined based on a reporting configuration with multiple sub-configurations or based on one of a plurality of candidate resource configurations of the reference signal. The steps include:
determining whether or not to not transmit one or more of the plurality of measurement results based on a dropping rule, wherein the dropping rule is based on one or more of the following:
- a measurement result with a low priority is dropped,
- a measurement result with a rank indicator indicating a rank higher or lower than a rank threshold is not dropped
- a measurement result with a channel quality indicator indicating a channel quality higher or lower than a channel quality threshold is not dropped,
- measurement results in descending order of priority are selected for transmission until an upper capacity limit of an uplink channel resource for carrying the measurement results is reached, wherein the remaining non-selected measurement results are dropped, optionally wherein the upper capacity limit is determined by the UE based on an amount of available resources in the uplink channel or based on an indication received from the base station via one or more of a Radio Resource Control, RRC, message, a Medium Access Control, MAC Control Element, or a downlink control information, DCI, message,
- measurement results in descending order of priority are selected for transmission until an upper processing limit of the UE for processing measurement results is reached, wherein the remaining non-selected measurement results are dropped, optionally wherein the upper processing limit is determined by the UE based on an indication received from the base station via one or more of a Radio Resource Control, RRC, message, a Medium Access Control, MAC Control Element, or a downlink control information, DCI, message, and
- a number N of measurement results among the plurality of measurement results, optionally wherein measurement results generated based on the first or last N sub-configurations are dropped, optionally wherein the first N measurement results with highest or lowest rank indicators are dropped, optionally wherein the first N measurement results with highest or lowest channel quality indicator are dropped, optionally wherein the UE determines the number N from a Medium Access Control, MAC Control Element, or a downlink control information, DCI, message.

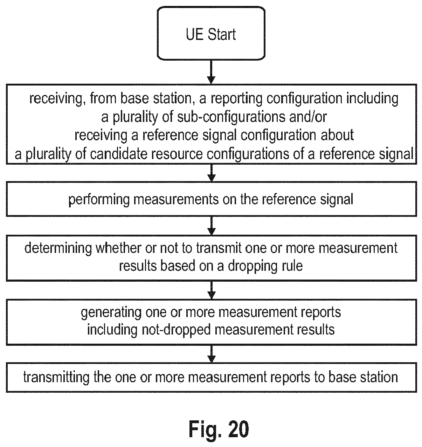

A corresponding sequence diagram for an exemplary UE behaviour in line with the above-discussed UE and UE method according to the Fourth solution is illustrated in Fig. 20. As further apparent from Fig. 20, although the Fourth Solution focuses on how measurement results are dropped from transmission, there may be other aspects of the Fourth solution. For instance, the UE may receive necessary configuration information for being able to perform the measurement and measurement reporting. This might involve that the UE receives from the base station a reporting configuration with a plurality of sub-configurations within, and/or that the UE receives from the base station a reference signal configuration with a plurality of candidate resource configurations of the reference signal. Correspondingly, the UE performs measurements on the reference signal, in accordance with the received configuration(s). The thus achieved measurement results can then be subject to the improved dropping mechanism of the Fourth solution, as presented above and explained in detail below. Further, the UE may generate one or more measurement reports with the thus not-dropped measurement results. Finally, the thus generated measurement reports are transmitted by the UE to the base station.

The Fourth Solution also provides an improved base station, which may comprise the following.

A processor of the base station generates a reporting configuration, including a plurality of sub-configurations. In addition, or alternatively, the processor may generate a reference signal configuration having a plurality of candidate resource configurations of the reference signal that can be transmitted by the base station to the UE. A transmitter of the base station then transmits the generated reporting configuration and the generated reference signal configuration to the UE. A receiver of the base station receives one or more measurement reports from the UE, which are generated by the UE after having applied - if necessary - a dropping mechanism following a dropping rule. In one example, the dropping rule(s) can be defined and controlled by the base station so as to be based on one or more of the following:
- a measurement result with a low priority is dropped,
- a measurement result with a rank indicator indicating a rank higher or lower than a rank threshold is not dropped
- a measurement result with a channel quality indicator indicating a channel quality higher or lower than a channel quality threshold is not dropped,
- measurement results in descending order of priority are selected for transmission until an upper capacity limit of an uplink channel resource for carrying the measurement results is reached, wherein the remaining non-selected measurement results are dropped, optionally wherein the upper capacity limit is determined by the UE based on an amount of available resources in the uplink channel or based on an indication received from the base station via one or more of a Radio Resource Control, RRC, message, a Medium Access Control, MAC Control Element, or a downlink control information, DCI, message,
- measurement results in descending order of priority are selected for transmission until an upper processing limit of the UE for processing measurement results is reached, wherein the remaining non-selected measurement results are dropped, optionally wherein the upper processing limit is determined by the UE based on an indication received from the base station via one or more of a Radio Resource Control, RRC, message, a Medium Access Control, MAC Control Element, or a downlink control information, DCI, message, and
- a number N of measurement results among the plurality of measurement results, optionally wherein the first or last N measurement results generated based on sub-configurations are dropped, optionally wherein the first N measurement results with highest or lowest rank indicators are dropped, optionally wherein the first N measurement results with highest or lowest channel quality indicator are dropped, optionally wherein the UE determines the number N from a Medium Access Control, MAC Control Element, or a downlink control information, DCI, message.

The Fourth Solution thus allows to adapt the existing CSI dropping procedure also to those scenarios in which the measurement results are generated based on different transmission characteristics of a reference signal (e.g. generated based on the candidate resource configurations of the reference signal of the First Solution) and/or for scenarios in which the measurement results are generated based on sub-configurations within a reporting configuration (e.g. the sub-configurations of the Second Solution). In more detail, 5G NR already provides mechanisms for dropping or reducing CSI reports.

In more detail, the technical standard TS 38.214 defines in clauses 5.2.3 and 5.2.4 CSI reporting using PUSCH respectively PUCCH, which may result in the dropping or reducing of measurement results. Clause 5.2.1.6 of TS 38.214 further defines CSI processing criteria, providing limits to the UE's processing of CSI reports. Furthermore, clause 6.3.1.1.2 of TS 38.212 provides details on the CSI reports too.

In summary, the dropping or reduction of measurement results is used by the UE in various mechanisms and can be improved according to the Fourth solution. The inventors have thus identified the possibility to adapt such existing mechanisms to the new scenarios.

The dropping concept according to the Fourth Solution will be discussed in more detail below.

According to one possible dropping rule, the dropping can be based on a priority determined for a measurement result. According to one exemplary implementation, the priority can be determined according to the Third Solution. On the other hand, the priority of the measurement results can also be determined differently than according to the Third solution.

Another possible dropping rule is based on the rank indicator that can be included in a measurement report. A rank indicator threshold can be defined, with which the rank indicator of a measurement result is then compared. Depending on the intention of the measurement reporting, a rank indicator that is higher or lower than the rank threshold is not to be dropped by the UE. As already discussed for the Third solution, both a high and a low rank indicator value can be of particular interest to the base station and thus should not be dropped, if possible. The dropping rule can be adapted and configured accordingly to suit the needs of the base station.

Another possible dropping rule is based on the channel quality indicator that indicates a channel quality. A channel quality threshold can be defined, with which the channel quality indicator of a measurement result is then compared. Depending on the intention of the measurement reporting, a channel quality indicator that is higher or lower than the channel quality threshold is not to be dropped by the UE. As already discussed for the Third solution, both a high and a low channel quality indication can be of particular interest to the base station and thus should not be dropped, if possible. The dropping rule can be adapted and configured accordingly to suit the needs of the base station.

Another possible dropping rule takes into account the capacity of an uplink channel resource for carrying the measurement results to the base station. In particular, an upper limit of the capacity of said uplink channel resource can be determined or configured. The upper capacity limit could for instance be determined by the UE based on the amount of available resources in the uplink channel. In addition, or alternatively, the upper capacity limit can be indicated by the base station, e.g. via an RRC message, MAC CE, or DCI message. In any case, such an upper capacity limit is defined and should be taken into account. Thus, when the measurement results to be transmitted would exceed the upper capacity limit, it would be necessary for the UE to perform dropping or reducing. To said end, the UE selects as many measurement results until the thus defined upper capacity limit for the uplink channel resource is reached. Any other measurement results cannot be transmitted and thus are dropped by the UE. According to one example, the measurement results can be selected in a descending order of priority, although a different selection order can equally be possible.

Another possible dropping rule takes into account the processing limit of the UE for processing measurement results. In particular, an upper limit of that UE processing capacity can be determined by the UE, e.g. based on its own capabilities. In addition or alternatively, the upper processing limit can be indicated by the base station, e.g. via an RRC message, MAC CE, or DCI message. In any case, such an upper processing limit is defined and should be taken into account. Each measurement result and measurement report can be associated with a processing occupancy, and the calculated sum of the processing occupancies should not exceed the upper processing limit. In case of surpassing the upper processing limit, it would be necessary for the UE to perform dropping or reducing. To said end, the UE selects as many measurement results until the sum of the occupancy values of the selected measurement results reaches the defined upper processing limit. Any other measurement results cannot be transmitted and thus are dropped by the UE. According to one example, the measurement results can be selected in a descending order of priority, although a different selection order can equally be possible.

The two preceding dropping rules make use of a priority of the measurement results during the selection. According to example implementations thereof, the priority can be determined according to the Third Solution discussed above, although different priority determination would also be possible (e.g. according to the current definition in TS 38.214, section 5.2.5).

According to still another dropping rule, the UE simply selects N measurement results among all the available. For instance, the first or last N measurements in sequence may be selected for transmission, while the remaining measurement results can be dropped by the UE if necessary. The sequence order could be for instance following the rank indicator value, resulting e.g. in that the first N with highest or lowest rank indicator values are dropped. Another possibility for the sequence order could be to follow the index of the sub-configurations based on which the measurement result was generated. That might result e.g. in that the first N with the lowest or highest indices of the associated sub-configurations are dropped. Still another possibility for the sequence order could be to follow the channel quality indicator value, resulting e.g. in that the first N with highest or lowest channel quality indicator values are dropped. The number N can be determined by the UE, e.g. from an indication transmitted by the base station in a MAC CE or DCI message.

According to the Fourth Solution, the improved dropping procedure is used as part of the measurement and measurement reporting procedure, and can be applied where necessary. Some scenarios in which the dropping procedure should be applied were already mentioned, above, such as in connection with the upper uplink channel capacity limit and the upper measurement processing limit. The improved dropping can be applied in the following situations too.

Generally, dropping might become necessary if the UE is not able to transmit all the available measurement results to the base station in a particular reporting period. A more detailed example relates to the case where two or more measurement results collide with each other in the time domain.

The measurement results that are selected for transmission are multiplexed and then transmitted.

Further variants of the Fourth Solution, which can be combined with other variants, take into account that some formats for transmitting measurement results are based on dividing the measurement results into two parts. According to one example, the first part can have a fixed bit size, includes some measurement results and further identifies a number of bits of the second part with the remaining measurement results. There are several possibilities of how the improved dropping procedure can be applied by the UE to such two-part formats for reporting measurement results. One possibility is that the dropping is performed for both the first and second parts of the measurement result, such that it is dropped or selected for transmission as a whole. Another possibility is that the dropping is performed for only one of the two parts, e.g. for the first part but not the second part of measurement result, or for the second part but not for the first part of the measurement results.

According to an exemplary 5G-compliant implementation, two-part CSI reporting formats already exist, e.g. CSI part 1 and CSI part 2 are known from TS 38.212, clause 6.3.1.1.2, and TS 38.214 clauses 5.2.3 and 5.2.4. As apparent therefrom, CSI Part 1 has a fixed payload size, comprises some CSIs and identifies the number of information bits of CSI Part 2, which in turn comprises further CSIs.

According to further variants of the Fourth Solution, which can be combined with other variants, the UE is able to indicate its capability to the base station. This has the advantage that the base station can configure the UE measurement and reporting more appropriately considering the UE capability. The UE capability indication can indicate one or more of the following.

One possible indication is the maximum number of reporting configurations that the UE should be configured with. In addition, or alternatively, the UE capability indication might indicate the maximum number of reporting configurations configured with multiple sub-configurations that the UE should be configured with. Another possible indication is the maximum number of sub-configurations within a reporting configuration that the UE should be configured with. Still another indication could be the maximum total number of sub-configurations across all reporting configuration.

The UE may determine the corresponding maximum parameters by itself. In one exemplary implementation, a scaling factor, between 0 and 1, can be applied by the UE when determining some of the above-noted maximum parameters. In one example, a sub-configuration may be counted in the same manner as a reporting configuration. On the other hand, a sub-configuration may not be fully counted by the UE, but should contribute only partly to the maximum parameter, i.e. should be scaled in a suitable manner, e.g. with a scaling factor of 0.5.

According to a 5G-compliant exemplary implementation, the Fourth Solution reuses at least part of the configuration structure for measurement and measurement reporting already defined in the 3GPP standards, e.g. as explained above. According to one exemplary assumption, the above-noted reference signal can be the CSI-RS, Channel State Information Reference Signal.

### Further Aspects

According to a first aspect, a UE is provided that includes the following. A receiver receives, from a base station, a reference signal configuration about a plurality of candidate resource configurations of a reference signal that can be transmitted by the base station to the UE. The receiver receives, from the base station, a reference signal configuration indication, indicating one or more of the configured plurality of candidate resource configurations. A processor measures the reference signal received from the base station based on the indicated candidate resource configurations. The processor generates one or more measurement reports including measurement results for the measured reference signal. A transmitter transmits, to the base station, the generated measurement reports.

According to a second aspect provided in addition to the first aspect, at least two of the plurality of candidate resource configurations differ from one another by defining a candidate transmission characteristic for the reference signal having a different value. The different candidate transmission characteristics are one or more of
- different antenna port patterns for the reference signal,
- different transmission powers for the reference signal, and
- different transmission powers for a downlink data channel for which the reference signal is measured.

In an optional implementation, the plurality of candidate resource configurations further define radio resource elements in the frequency domain and time domain for carrying the reference signal.

According to a third aspect provided in addition to the second aspect, an antenna port pattern for the reference signal is defined by a candidate resource configuration based on one or more of:
- a code division multiplex, CDM, group index,
- an index of an antenna port, and
- a combination of a CDM group index and an antenna port index.

In an optional implementation, the transmission power for the downlink data channel is defined based on a power offset with respect to the reference signal. In a further optional implementation, the transmission power for the reference signal is defined based on a power offset with respect to a synchronization signal block transmission from the base station.

According to a fourth aspect provided in addition to any one of the first to third aspects, at least one of the plurality of candidate resource configurations is defined such that it defines at least one transmission characteristic that is different than actually used by the base station. In an optional implementation, the different transmission characteristic refers to one or more of:
- a different antenna port pattern, such as a sub-set among all antenna ports actually used by the base station to transmit the reference signal, and
- a different transmission power, such as a lower or higher transmission power than actually used by the base station to transmit the reference signal,
- a different transmission power, such as a lower or higher transmission power than actually used by the base station to transmit the downlink data channel.

According to a fifth aspect, provided in addition to any one of the first to fourth aspects, the reference signal configuration configures one or more of radio resources for the reference signal, wherein at least one radio resource is defined with two or more different candidate transmission characteristic for the reference signal. In an optional implementation, the reference signal configuration configures one or more radio resource sets for the reference signal, wherein each radio resource set indicates one or more of the radio resources for the reference signal.

According to a sixth aspect, provided in addition to any one of the first to fifth aspects, the reference signal configuration indication indicates the one or more candidate resource configurations based on one or more of:
- a group ID, wherein each of the plurality of candidate resource configurations is associated with one among a plurality of group IDs,
- a bitmap, wherein each bit of the bitmap is associated with one or more of the plurality of candidate resource configurations, and one value of the bit of the bitmap indicates that a measurement of the reference signal shall be based on the associated one or more candidate resource configurations, and
- a codeword, wherein each codeword is associated with one or more of the plurality of candidate resource configurations.

In an optional implementation, the reference signal configuration indication is received by the UE as a Radio Resource Control, RRC, message or a Medium Access Control, MAC, Control Element or a downlink control information, DCI, message. In a further optional implementation, the reference signal configuration is received by the UE as a Radio Resource Control, RRC, message. In a further optional implementation, the generating and transmitting of the measurement reports is performed by the UE periodically, semi-persistently or aperiodically.

According to a seventh aspect, provided in addition to any one of the first to sixth aspects, the receiver receives, from the base station, reporting configuration, including a plurality of sub-configurations each of which configures one or more of:
- a set of measurement reporting quantities, such as one or more of a channel quality parameter, a channel quality indicator, a precoding matrix indicator, a reference signal indicator, a layer indicator, a rank indicator,
- an uplink channel transmission configuration, configuring one or more of time and frequency of radio resources for an uplink channel , usable for transmitting the measurement results for the respective sub-configuration.

The receiver receives a reporting indication, indicating one or more of the sub-configurations. The processor generates a measurement report and the transmitter transmits the measurement report based on the indicated one or more sub-configurations.

According to an eighth aspect, provided in addition to the seventh aspect, a sub-configuration further includes reference signal configuration defining a reference signal. In an optional implementation, a sub-configuration further includes the reference signal configuration about one or a plurality of candidate resource configurations of a reference signal with different transmission characteristics that can be transmitted by the base station to the UE.

According to a ninth aspect, provided in addition to the seventh or eighth aspect, one uplink channel transmission configuration is configured
- per sub-configuration, or
- shared for at least two sub-configurations, or
- shared for all sub-configurations,
optionally wherein one set of measurement reporting quantities is configured
- per sub-configuration, or
- for at least two sub-configurations, or
- for all sub-configurations,
optionally wherein one reference signal configuration is configured
- per sub-configuration, or
- for at least two sub-configurations, or
- for all sub-configurations.

According to a tenth aspect provided in addition to any one of the seventh to ninth aspects, the reporting indication indicates the one or more sub-configurations based on one or more of:
- a group ID, wherein each of the plurality of sub-configurations is associated with one among a plurality of group IDs,
- a bitmap, wherein each bit of the bitmap is associated with one or more of the sub-configurations, and one value of the bit of the bitmap indicates that generating and transmitting of a measurement report shall be based on the associated sub-configuration, and
- a codeword, wherein each codeword is associated with a combination of two or more of the plurality of sub-configurations.

In an optional implementation, the reporting indication indicates the first or last N sub-configurations among all the plurality of sub-configurations. In an optional implementation, the reporting indication is received by the UE as a Radio Resource Control, RRC, message or a Medium Access Control, MAC, Control Element or a downlink control information, DCI, message. In an optional implementation, the reporting configuration is received by the UE as a Radio Resource Control, RRC, message. In an optional implementation, the generating and transmitting of the measurement reports is performed by the UE periodically, semi-persistently or aperiodically.

According to an eleventh aspect, provided in addition to any one of the first to tenth aspects, the processor determines a priority of the measurement results to be transmitted to the base station. The priority of the measurement results depends on a priority determination rule which is based on one or more of the following:
- a measurement result determined based on a reporting configuration with multiple sub-configurations has a higher or lower priority than a measurement result determined based on a reporting configuration without multiple sub-configurations,
- the number of sub-configurations of a reporting configuration, optionally wherein the higher the number of sub-configurations of a reporting configuration, the higher or the lower the priority of the measurement result determined based on said reporting configuration, and
- the lower an index associated with a sub-configuration of a reporting configuration, the higher or lower the priority of the measurement result determined based on said sub-configuration.

According to a twelfth aspect, provided in addition to the eleventh aspect, the priority determination rule for determining the priority of measurement results is further based on one or more of the following:
- the higher the rank indicated by a rank indicator of a measurement result, the higher or lower the priority of the measurement result,
- the higher the channel quality indicated by a channel quality indicator of a measurement result, the higher or lower the priority of the measurement result,
optionally wherein the priority determination rule for determining the priority of measurement results is further based on one or more of the following:
- the lower an index associated with a reporting configuration, the higher or lower the priority of the measurement results determined based on said reporting configuration.

According to a thirteenth aspect, provided in addition to the eleventh or twelfth aspect, the priority of measurement results is taken into account by the processor for one or more of the following processes:
- a bit sequence generation of uplink control information, carrying the measurement results, optionally wherein the priority of the measurement results is taken into account for determining an order of bits generated by the bit sequence generation, and
- dropping of measurement results, optionally wherein the measurement result dropping involves dropping measurement results in an ascending order of priority.

According to a fourteenth aspect, provided in addition to any one of the first to thirteenth aspects, a plurality of measurement results are to be transmitted to the base station. At least one of the measurement results is determined based on a reporting configuration with multiple sub-configurations or based one of a plurality of candidate resource configurations of the reference signal. The processor determines whether or not to transmit one or more of the plurality of measurement results based on a dropping rule, wherein the dropping rule is based on one or more of the following:
- a measurement result with a low priority is dropped,
- a measurement result with a rank indicator indicating a rank higher or lower than a rank threshold is not dropped
- a measurement result with a channel quality indicator indicating a channel quality higher or lower than a channel quality threshold is not dropped,
- measurement results in descending order of priority are selected for transmission until an upper capacity limit of an uplink channel resource for carrying the measurement results is reached, wherein the remaining non-selected measurement results are dropped, optionally wherein the upper capacity limit is determined by the UE based on an amount of available resources in the uplink channel or based on an indication received from the base station via one or more of a Radio Resource Control, RRC, message, a Medium Access Control, MAC Control Element, or a downlink control information, DCI, message,
- measurement results in descending order of priority are selected for transmission until an upper processing limit of the UE for processing measurement results is reached, wherein the remaining non-selected measurement results are dropped, optionally wherein the upper processing limit is determined by the UE based on an indication received from the base station via one or more of a Radio Resource Control, RRC, message, a Medium Access Control, MAC Control Element, or a downlink control information, DCI, message, and
- a number N of measurement results among the plurality of measurement results, optionally wherein measurement results generated based on the first or last N sub-configurations are dropped, optionally wherein the first N measurement results with highest or lowest rank indicators are dropped, optionally wherein the first N measurement results with highest or lowest channel quality indicator are dropped, optionally wherein the UE determines the number N from a Medium Access Control, MAC Control Element, or a downlink control information, DCI, message.

According to a fifteenth aspect, provided in addition to the fourteenth aspect, the dropping rule is applied in one or more of the following cases:
- in a case where not all of the plurality of measurement results can be transmitted,
- in case of a collision of two or more measurement results in the time domain,
- in case a total capacity for transmitting the plurality of measurement results is larger than the upper capacity limit of the uplink channel resource for carrying measurement results, and
- in case a total processing for transmitting the plurality of measurement results is larger than the upper processing limit of the UE for processing measurement results.

According to a sixteenth aspect, provided in addition to the fourteenth or fifteenth aspect, the measurement result is to be transmitted being divided into two parts. When processor applies the dropping rule, the dropping rule is applied by the processor to:
- both the first and second parts of the measurement result, or
- the first part but not the second part of the measurement result, or
- the second part but not the first part of the measurement result.

In an optional implementation, the first part has a fixed bit size, includes some measurement results and further identifies a number of bits of the second part.

According to a seventeenth aspect, provided in addition to any one of the fourteenth to sixteenth claims, the processor generates a UE capability indication, indicating one or more of the following:
- a maximum number of reporting configurations,
- a maximum number of reporting configurations configured with multiple sub-configurations,
- a maximum number of sub-configurations within a reporting configuration, and
- a maximum total number of sub-configurations across all reporting configurations.

In an optional implementation, the processor determines one or more of the maximum number of sub-configurations and the maximum total number of sub-configurations based on a scaling factor, wherein the scaling factor is a value between 0 and 1 multiplied for each sub-configuration.

According to an eighteenth aspect, a based station is provided comprising the following. A processor of the base station generates a reference signal configuration having a plurality of candidate resource configurations of a reference signal that can be transmitted by the base station to a user equipment, UE. A transmitter of the base station transmits the generated reference signal configuration to the UE. The processor determines one or more of the configured plurality of candidate resource configurations for use by the UE. The transmitter transmits a reference signal configuration indication to the UE, indicating the determined one or more candidate resource configurations. The transmitter transmits the reference signal to the UE. A receiver receives one or more measurement reports from the UE, including measurement results for the reference signal, measured by the UE based on the indicated one or more candidate resource configurations.

According to a nineteenth aspect, a method is provided comprising the following steps performed by a user equipment, UE:
receiving, from a base station, a reference signal configuration having a plurality of candidate resource configurations of a reference signal that can be transmitted by the base station to the UE,
receiving, from the base station, a reference signal configuration indication , indicating one or more of the configured plurality of candidate resource configurations,
measuring the reference signal received from the base station based on the indicated candidate resource configurations,
generating one or more measurement reports including measurement results for the measured reference signal, and
transmitting, to the base station, the generated measurement reports.

According to a 20^{th} aspect, a method is provided comprising the following steps performed by a base station:
generating a reference signal configuration having a plurality of candidate resource configurations of a reference signal that can be transmitted by the base station to a user equipment, UE,
transmitting the generated reference signal configuration to the UE,
determining one or more among the configured plurality of candidate resource configurations for use by the UE,
transmitting a reference signal configuration indication to the UE, indicating the determined one or more candidate resource configurations,
transmitting the reference signal to the UE, and
receiving one or more measurement reports from the UE, including measurement results for the reference signal, measured by the UE based on the indicated one or more candidate resource configurations.

According to a 21^{st} aspect, an integrated circuit is provided , which, in operation, controls a process of a user equipment, UE, the process comprising the following steps performed by the UE:
receiving, from a base station, a reference signal configuration having a plurality of candidate resource configurations of a reference signal that can be transmitted by the base station to the UE,
receiving, from the base station, a reference signal configuration indication , indicating one or more of the configured plurality of candidate resource configurations,
measuring the reference signal received from the base station based on the indicated candidate resource configurations,
generating one or more measurement reports including measurement results for the measured reference signal, and
transmitting, to the base station, the generated measurement reports.

According to a 22^{nd} aspect, an integrated circuit is provided which, in operation, controls a process of a base station, the process comprising the following steps performed by the base station:
generating a reference signal configuration having a plurality of candidate resource configurations of a reference signal that can be transmitted by the base station to a user equipment, UE,
transmitting the generated reference signal configuration to the UE,
determining one or more among the configured plurality of candidate resource configurations for use by the UE,
transmitting a reference signal configuration indication to the UE, indicating the determined one or more candidate resource configurations,
transmitting the reference signal to the UE, and
receiving one or more measurement reports from the UE, including measurement results for the reference signal, measured by the UE based on the indicated one or more candidate resource configurations.

### Further Variants, including Hardware and Software Implementation of the present disclosure

The present disclosure can be realized by software, hardware, or software in cooperation with hardware. Each functional block used in the description of each embodiment described above can be partly or entirely realized by an LSI such as an integrated circuit, and each process described in the each embodiment may be controlled partly or entirely by the same LSI or a combination of LSIs. The LSI may be individually formed as chips, or one chip may be formed so as to include a part or all of the functional blocks. The LSI may include a data input and output coupled thereto. The LSI here may be referred to as an IC (integrated circuit), a system LSI, a super LSI, or an ultra LSI depending on a difference in the degree of integration. However, the technique of implementing an integrated circuit is not limited to the LSI and may be realized by using a dedicated circuit, a general-purpose processor, or a special-purpose processor. In addition, a FPGA (Field Programmable Gate Array) that can be programmed after the manufacture of the LSI or a reconfigurable processor in which the connections and the settings of circuit cells disposed inside the LSI can be reconfigured may be used. The present disclosure can be realized as digital processing or analogue processing. If future integrated circuit technology replaces LSIs as a result of the advancement of semiconductor technology or other derivative technology, the functional blocks could be integrated using the future integrated circuit technology. Biotechnology can also be applied.

The present disclosure can be realized by any kind of apparatus, device or system having a function of communication, which is referred to as a communication apparatus.

The communication apparatus may comprise a transceiver and processing/control circuitry. The transceiver may comprise and/or function as a receiver and a transmitter. The transceiver, as the transmitter and receiver, may include an RF (radio frequency) module including amplifiers, RF modulators/demodulators and the like, and one or more antennas.

Some non-limiting examples of such a communication apparatus include a phone (e.g., cellular (cell) phone, smart phone), a tablet, a personal computer (PC) (e.g., laptop, desktop, netbook), a camera (e.g., digital still/video camera), a digital player (digital audio/video player), a wearable device (e.g., wearable camera, smart watch, tracking device), a game console, a digital book reader, a telehealth/telemedicine (remote health and medicine) device, and a vehicle providing communication functionality (e.g., automotive, airplane, ship), and various combinations thereof.

The communication apparatus is not limited to be portable or movable, and may also include any kind of apparatus, device or system being non-portable or stationary, such as a smart home device (e.g., an appliance, lighting, smart meter, control panel), a vending machine, and any other "things" in a network of an "Internet of Things (IoT).

The communication may include exchanging data through, for example, a cellular system, a wireless LAN system, a satellite system, etc., and various combinations thereof.

The communication apparatus may comprise a device such as a controller or a sensor, which is coupled to a communication device performing a function of communication described in the present disclosure. For example, the communication apparatus may comprise a controller or a sensor that generates control signals or data signals, which are used by a communication device performing a communication function of the communication apparatus.

The communication apparatus also may include an infrastructure facility, such as a base station, an access point, and any other apparatus, device or system that communicates with or controls apparatuses such as those in the above non-limiting examples.

### (Control Signals)

In the present disclosure, the downlink control signal (information) related to the present disclosure may be a signal (information) transmitted through PDCCH of the physical layer or may be a signal (information) transmitted through a MAC Control Element (CE) of the higher layer or the RRC. The downlink control signal may be a pre-defined signal (information).

The uplink control signal (information) related to the present disclosure may be a signal (information) transmitted through PUCCH of the physical layer or may be a signal (information) transmitted through a MAC CE of the higher layer or the RRC. Further, the uplink control signal may be a pre-defined signal (information). The uplink control signal may be replaced with uplink control information (UCI), the 1st stage sidelink control information (SCI) or the 2nd stage SCI.

### (Base Station)

In the present disclosure, the base station may be a Transmission Reception Point (TRP), a clusterhead, an access point, a Remote Radio Head (RRH), an eNodeB (eNB), a gNodeB (gNB), a Base Station (BS), a Base Transceiver Station (BTS), a base unit or a gateway, for example. Further, in side link communication, a terminal may be adopted instead of a base station. The base station may be a relay apparatus that relays communication between a higher node and a terminal. The base station may be a roadside unit as well.

### (Uplink/Downlink/Sidelink)

The present disclosure may be applied to any of uplink, downlink and sidelink.

The present disclosure may be applied to, for example, uplink channels, such as PUSCH, PUCCH, and PRACH, downlink channels, such as PDSCH, PDCCH, and PBCH, and side link channels, such as Physical Sidelink Shared Channel (PSSCH), Physical Sidelink Control Channel (PSCCH), and Physical Sidelink Broadcast Channel (PSBCH).

PDCCH, PDSCH, PUSCH, and PUCCH are examples of a downlink control channel, a downlink data channel, an uplink data channel, and an uplink control channel, respectively. PSCCH and PSSCH are examples of a sidelink control channel and a sidelink data channel, respectively. PBCH and PSBCH are examples of broadcast channels, respectively, and PRACH is an example of a random access channel.

### (Data Channels/Control Channels)

The present disclosure may be applied to any of data channels and control channels. The channels in the present disclosure may be replaced with data channels including PDSCH, PUSCH and PSSCH and/or control channels including PDCCH, PUCCH, PBCH, PSCCH, and PSBCH.

### (Reference Signals)

In the present disclosure, the reference signals are signals known to both a base station and a mobile station and each reference signal may be referred to as a Reference Signal (RS) or sometimes a pilot signal. The reference signal may be any of a DMRS, a Channel State Information - Reference Signal (CSI-RS), a Tracking Reference Signal (TRS), a Phase Tracking Reference Signal (PTRS), a Cell-specific Reference Signal (CRS), and a Sounding Reference Signal (SRS).

### (Time Intervals)

In the present disclosure, time resource units are not limited to one or a combination of slots and symbols, and may be time resource units, such as frames, superframes, subframes, slots, time slot subslots, minislots, or time resource units, such as symbols, Orthogonal Frequency Division Multiplexing (OFDM) symbols, Single Carrier-Frequency Division Multiplexing Access (SC-FDMA) symbols, or other time resource units. The number of symbols included in one slot is not limited to any number of symbols exemplified in the embodiment(s) described above, and may be other numbers of symbols.

### (Frequency Bands)

The present disclosure may be applied to any of a licensed band and an unlicensed band.

### (Communication)

The present disclosure may be applied to any of communication between a base station and a terminal (Uu-link communication), communication between a terminal and a terminal (Sidelink communication), and Vehicle to Everything (V2X) communication. The channels in the present disclosure may be replaced with PSCCH, PSSCH, Physical Sidelink Feedback Channel (PSFCH), PSBCH, PDCCH, PUCCH, PDSCH, PUSCH, and PBCH.

In addition, the present disclosure may be applied to any of a terrestrial network or a network other than a terrestrial network (NTN: Non-Terrestrial Network) using a satellite or a High Altitude Pseudo Satellite (HAPS). In addition, the present disclosure may be applied to a network having a large cell size, and a terrestrial network with a large delay compared with a symbol length or a slot length, such as an ultra-wideband transmission network.

### (Antenna Ports)

An antenna port refers to a logical antenna (antenna group) formed of one or more physical antenna(s). That is, the antenna port does not necessarily refer to one physical antenna and sometimes refers to an array antenna formed of multiple antennas or the like. For example, it is not defined how many physical antennas form the antenna port, and instead, the antenna port is defined as the minimum unit through which a terminal is allowed to transmit a reference signal. The antenna port may also be defined as the minimum unit for multiplication of a precoding vector weighting.

Further, the various embodiments may also be implemented by means of software modules, which are executed by a processor or directly in hardware. Also a combination of software modules and a hardware implementation may be possible. The software modules may be stored on any kind of computer readable storage media, for example RAM, EPROM, EEPROM, flash memory, registers, hard disks, CD-ROM, DVD, etc. It should be further noted that the individual features of the different embodiments may individually or in arbitrary combination be subject matter to another embodiment.

It would be appreciated by a person skilled in the art that numerous variations and/or modifications may be made to the present disclosure as shown in the specific embodiments. The present embodiments are, therefore, to be considered in all respects to be illustrative and not restrictive.

## Claims

1. A user equipment, UE, comprising:
a receiver, which in operation receives, from a base station, a reference signal configuration having a plurality of candidate resource configurations of a reference signal that can be transmitted by the base station to the UE,
the receiver, which in operation receives, from the base station, a reference signal configuration indication, indicating one or more of the configured plurality of candidate resource configurations,
a processor, which in operation measures the reference signal received from the base station based on the indicated candidate resource configurations,
the processor, which in operation generates one or more measurement reports including measurement results for the measured reference signal, and
a transmitter, which in operation transmits, to the base station, the generated measurement reports.

2. The user equipment according to claim 1, wherein at least two of the plurality of candidate resource configurations differ from one another by defining a candidate transmission characteristic for the reference signal having a different value, wherein the different candidate transmission characteristics are one or more of
• different antenna port patterns for the reference signal,
• different transmission powers for the reference signal, and
• different transmission powers for a downlink data channel for which the reference signal is measured,
optionally wherein the plurality of candidate resource configurations further define
• radio resource elements in the frequency domain and time domain for carrying the reference signal.

3. The user equipment according to claim 2, wherein an antenna port pattern for the reference signal is defined by a candidate resource configuration based on one or more of:
• a code division multiplex, CDM, group index,
• an index of an antenna port, and
• a combination of a CDM group index and an antenna port index, and
optionally wherein the transmission power for the downlink data channel is defined based on a power offset with respect to the reference signal,
optionally wherein the transmission power for the reference signal is defined based on a power offset with respect to a synchronization signal block transmission from the base station.

4. The user equipment according to any one of claims 1 to 3, wherein at least one of the plurality of candidate resource configurations is defined such that it defines at least one transmission characteristic that is different than actually used by the base station, optionally wherein the different transmission characteristic refers to one or more of:
• a different antenna port pattern, such as a sub-set among all antenna ports actually used by the base station to transmit the reference signal, and
• a different transmission power, such as a lower or higher transmission power than actually used by the base station to transmit the reference signal,
• a different transmission power, such as a lower or higher transmission power than actually used by the base station to transmit the downlink data channel.

5. The user equipment according to any one of claims 1 to 4, wherein the reference signal configuration configures one or more of radio resources for the reference signal, wherein at least one radio resource is defined with two or more different candidate transmission characteristic for the reference signal,
optionally wherein the reference signal configuration configures one or more radio resource sets for the reference signal, wherein each radio resource set indicates one or more of the radio resources for the reference signal.

6. The UE according to any one of claims 1 to 5, wherein the reference signal configuration indication indicates the one or more candidate resource configurations based on one or more of:
• a group ID, wherein each of the plurality of candidate resource configurations is associated with one among a plurality of group IDs,
• a bitmap, wherein each bit of the bitmap is associated with one or more of the plurality of candidate resource configurations, and one value of the bit of the bitmap indicates that a measurement of the reference signal shall be based on the associated one or more candidate resource configurations, and
• a codeword, wherein each codeword is associated with one or more of the plurality of candidate resource configurations,
optionally wherein the reference signal configuration indication is received by the UE as a Radio Resource Control, RRC, message or a Medium Access Control, MAC, Control Element or a downlink control information, DCI, message, and
optionally the reference signal configuration is received by the UE as a Radio Resource Control, RRC, message,
optionally wherein the generating and transmitting of the measurement reports is performed by the UE periodically, semi-persistently or aperiodically.

7. The UE according to any one of claims 1 to 6, wherein the receiver, in operation receives, from the base station, reporting configuration, including a plurality of sub-configurations each of which configures one or more of:
∘ a set of measurement reporting quantities, such as one or more of a channel quality parameter, a channel quality indicator, a precoding matrix indicator, a reference signal indicator, a layer indicator, a rank indicator,
∘ an uplink channel transmission configuration, configuring one or more of time and frequency of radio resources for an uplink channel, usable for transmitting the measurement results for the respective sub-configuration,
the receiver, in operation receives a reporting indication, indicating one or more of the sub-configurations,
wherein the processor generates a measurement report and the transmitter transmits the measurement report based on the indicated one or more sub-configurations.

8. The UE according to claim 7, wherein a sub-configuration further includes reference signal configuration defining a reference signal,
optionally wherein a sub-configuration further includes the reference signal configuration about one or a plurality of candidate resource configurations of a reference signal with different transmission characteristics that can be transmitted by the base station to the UE.

9. The UE according to claim 7 or 8, wherein one uplink channel transmission configuration is configured
• per sub-configuration, or
• shared for at least two sub-configurations, or
• shared for all sub-configurations,
optionally wherein one set of measurement reporting quantities is configured
• per sub-configuration, or
• for at least two sub-configurations, or
• for all sub-configurations,
optionally wherein one reference signal configuration is configured
• per sub-configuration, or
• for at least two sub-configurations, or
• for all sub-configurations.

10. The UE according to any one of claims 7 to 9, wherein the reporting indication indicates the one or more sub-configurations based on one or more of:
• a group ID, wherein each of the plurality of sub-configurations is associated with one among a plurality of group IDs,
• a bitmap, wherein each bit of the bitmap is associated with one or more of the sub-configurations, and one value of the bit of the bitmap indicates that generating and transmitting of a measurement report shall be based on the associated sub-configuration, and
• a codeword, wherein each codeword is associated with a combination of two or more of the plurality of sub-configurations,
optionally wherein the reporting indication indicates the first or last N sub-configurations among all the plurality of sub-configurations,
optionally wherein the reporting indication is received by the UE as a Radio Resource Control, RRC, message or a Medium Access Control, MAC, Control Element or a downlink control information, DCI, message,
optionally the reporting configuration is received by the UE as a Radio Resource Control, RRC, message, and
optionally wherein the generating and transmitting of the measurement reports is performed by the UE periodically, semi-persistently or aperiodically.

11. The UE according to any one of claims 1 to 10,
wherein the processor, in operation, determines a priority of the measurement results to be transmitted to the base station, wherein the priority of the measurement results depends on a priority determination rule which is based on one or more of the following:
• a measurement result determined based on a reporting configuration with multiple sub-configurations has a higher or lower priority than a measurement result determined based on a reporting configuration without multiple sub-configurations,
• the number of sub-configurations of a reporting configuration, optionally wherein the higher the number of sub-configurations of a reporting configuration, the higher or the lower the priority of the measurement result determined based on said reporting configuration, and
• the lower an index associated with a sub-configuration of a reporting configuration, the higher or lower the priority of the measurement result determined based on said sub-configuration.

12. The UE according to claim 11, wherein the priority determination rule for determining the priority of measurement results is further based on one or more of the following:
∘ the higher the rank indicated by a rank indicator of a measurement result, the higher or lower the priority of the measurement result,
∘ the higher the channel quality indicated by a channel quality indicator of a measurement result, the higher or lower the priority of the measurement result, optionally wherein the priority determination rule for determining the priority of measurement results is further based on one or more of the following:
∘ the lower an index associated with a reporting configuration, the higher or lower the priority of the measurement results determined based on said reporting configuration.

13. The UE according to any one of claims 1 to 12, wherein a plurality of measurement results are to be transmitted to the base station, wherein at least one of the measurement results is determined based on a reporting configuration with multiple sub-configurations or based one of a plurality of candidate resource configurations of the reference signal,
wherein the processor, in operation determines whether or not to transmit one or more of the plurality of measurement results based on a dropping rule, wherein the dropping rule is based on one or more of the following:
∘ a measurement result with a low priority is dropped,
∘ a measurement result with a rank indicator indicating a rank higher or lower than a rank threshold is not dropped
∘ a measurement result with a channel quality indicator indicating a channel quality higher or lower than a channel quality threshold is not dropped,
∘ measurement results in descending order of priority are selected for transmission until an upper capacity limit of an uplink channel resource for carrying the measurement results is reached, wherein the remaining non-selected measurement results are dropped, optionally wherein the upper capacity limit is determined by the UE based on an amount of available resources in the uplink channel or based on an indication received from the base station via one or more of a Radio Resource Control, RRC, message, a Medium Access Control, MAC Control Element, or a downlink control information, DCI, message,
∘ measurement results in descending order of priority are selected for transmission until an upper processing limit of the UE for processing measurement results is reached, wherein the remaining non-selected measurement results are dropped, optionally wherein the upper processing limit is determined by the UE based on an indication received from the base station via one or more of a Radio Resource Control, RRC, message, a Medium Access Control, MAC Control Element, or a downlink control information, DCI, message, and
∘ a number N of measurement results among the plurality of measurement results, optionally wherein measurement results generated based on the first or last N sub-configurations are dropped, optionally wherein the first N measurement results with highest or lowest rank indicators are dropped, optionally wherein the first N measurement results with highest or lowest channel quality indicator are dropped, optionally wherein the UE determines the number N from a Medium Access Control, MAC Control Element, or a downlink control information, DCI, message.

14. The UE according to claim 13, wherein the dropping rule is applied in one or more of the following cases:
∘ in a case where not all of the plurality of measurement results can be transmitted,
∘ in case of a collision of two or more measurement results in the time domain,
∘ in case a total capacity for transmitting the plurality of measurement results is larger than the upper capacity limit of the uplink channel resource for carrying measurement results, and
∘ in case a total processing for transmitting the plurality of measurement results is larger than the upper processing limit of the UE for processing measurement results.

15. A base station comprising:
a processor, which in operation, generates a reference signal configuration having a plurality of candidate resource configurations of a reference signal that can be transmitted by the base station to a user equipment, UE,
a transmitter, which in operation, transmits the generated reference signal configuration to the UE,
the processor, which in operation, determines one or more of the configured plurality of candidate resource configurations for use by the UE,
the transmitter, which in operation, transmits a reference signal configuration indication to the UE, indicating the determined one or more candidate resource configurations,
the transmitter, which in operation, transmits the reference signal to the UE,
a receiver, which in operation, receives one or more measurement reports from the UE, including measurement results for the reference signal, measured by the UE based on the indicated one or more candidate resource configurations.
